# EUROPEAN PATENT SPECIFICATION

(11) **EP 2 653 679 B1**
(45) Date of publication and mention of the grant of the patent: **05.12.2018**
(21) Application number: 11848184.5
(22) Date of filing: 21.09.2011
(51) Int. Cl.: F01N 3/01, F01N 3/02, F01N 3/04, F01N 3/00, F02M 26/15, F02M 26/23, F02M 26/35, F01N 13/00

(54) **EXHAUST GAS PURIFICATION DEVICE FOR DIESEL ENGINE USING HEAVY-OIL OR LOWER QUALITY FUEL**
ABGASREINIGUNGSVORRICHTUNG FÜR EINEN DIESELMOTOR MIT SCHWERÖL ODER MINDERWERTIGEM KRAFTSTOFF
DISPOSITIF D'ÉPURATION DES GAZ D'ÉCHAPPEMENT POUR MOTEUR DIESEL UTILISANT DE L'HUILE LOURDE OU UN CARBURANT DE BASSE QUALITÉ

(30) Priority: 16.12.2010 JP 2010281036; 20.05.2011 JP 2011113737
(43) Date of publication of application: 23.10.2013
(73) Proprietor: Usui Kokusai Sangyo Kaisha Ltd., Shizuoka 411-8610 (JP)
(72) Inventor: FURUGEN Munekatsu, Nishinomiya-shi Hyogo 662-0875 (JP); MAKINO Tadashi, Takatsuki-shi Osaka 569-1020 (JP); TAKIKAWA Kazunori, Sunto-gun Shizuoka 411-8610 (JP)
(74) Representative: Ipside
(86) International application number: PCT/JP2011/071472
(87) International publication number: WO 2012/081290

(56) References cited:
- WO-A2-2004/011783
- GB-A- 2 068 258
- JP-A- 56 126 613
- JP-A- 2002 071 120
- JP-A- 2003 505 642
- JP-A- 2005 533 963
- JP-A- 2009 108 848
- US-A1- 2008 309 087
- US-A1- 2009 107 141

## Description

### Technical Field

The present invention relates to an exhaust gas treatment technique for large-displacement marine diesel engines using particularly a low-grade fuel equal to or less than fuel oil, such as for watercrafts, for power generation, or for industrial purposes, for eliminating particulate matter (called below "PM") mainly including carbon, or harmful gas, such as nitrogen oxides (called below "NOx"), contained in exhaust gas of a marine diesel engine to purify the exhaust gas, and, in particular, relates to an exhaust gas purification equipment using corona discharge in the large-displacement marine diesel engine exhausting high-temperature exhaust gas.

### Background Art

Diesel engines are widely adopted as power sources for various watercrafts, power generators, large construction machines, and further, various automobiles, but since the PM or NOx contained in exhaust gas exhausted from the diesel engines, as is well known, not only causes air pollution, but also is extremely harmful to human bodies, purification of the exhaust gas is extremely important. Therefore, many suggestions have already been made, such as improvement of combustion systems of diesel engines, adoption of various types of exhaust gas filters, an exhaust gas recirculation (called below "EGR") method, a selective catalytic reduction (called below "SCR") process, or electrical treatment methods using corona discharge, and some of such suggestions have been in practical use.

Here, the components of the PM (particulate matter) in the exhaust gas of the diesel engine can be classified into two components: soluble organic fractions (called below "SOF"); and insoluble organic fractions (called below "ISF"), and the SOF of the two components is mainly composed of unburnt combustion components of fuel or lubricant oil, including harmful matter such as carcinogenic polycyclic aromatics. On the other hand, the ISF is mainly composed of low electrical resistive carbon (soot) and sulfate components, and the exhaust gas is desired to have as small an amount of SOF and ISF as possible, because of the effects of the SOF and ISF on human bodies and the environment. In particular, it is also said that the degree of the harmful effect of the PM on human bodies is problematic especially when the particulate size of the PM is nanometer size.

As the electrical treatment method using corona discharge, for example, the methods and equipments (Patent Literatures 1 to 3) described below have been suggested.

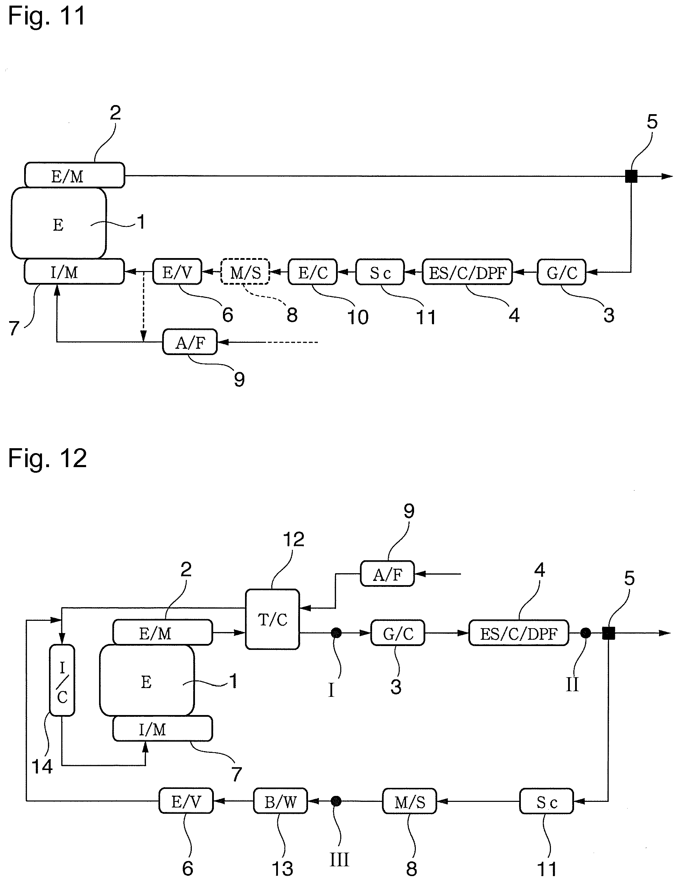

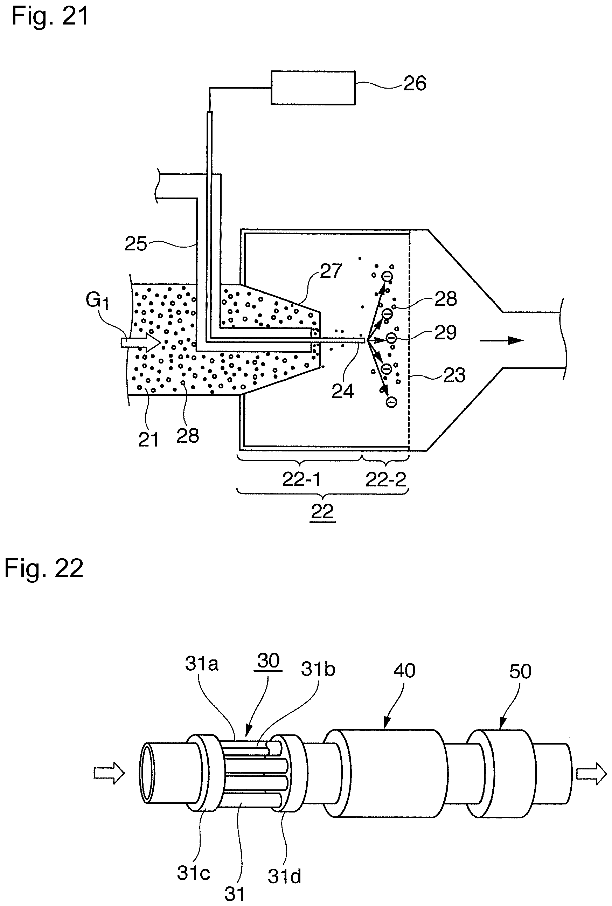

That is, as shown briefly in FIG. 21, the Patent Literature 1 suggests an electrical treatment method and equipment for exhaust gas of a diesel engine, the method and equipment having a system in which a discharging and charging part 22 comprising a corona discharging part 22-1 and a charging part 22-2 is provided with an exhaust gas passage 21, PM 28 mainly composed of carbon in exhaust gas G1 is charged with corona-discharged electrons 29, and the charged PM 28 is collected by a collection plate 23 disposed in the exhaust gas passage 21, the method and equipment having a configuration in which the length of an electrode needle 24 in the discharging and charging part 22 is short in a flowing direction of an exhaust gas stream, and the collection plate 23 is disposed so as to be perpendicular to the flowing direction of the exhaust gas stream. In FIG. 12, the reference numeral 25 denotes a seal gas pipe, 26 a high-voltage power supply apparatus, and 27 an exhaust gas guide pipe.

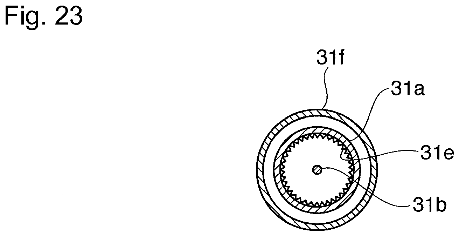

The Patent Literature 2 suggests a gas treatment equipment comprising a charging and agglomerating part for charging and agglomerating, by corona discharge, target components to be collected in exhaust gas of a diesel engine mounted on an automobile, and a filter part for collecting the agglomerated components. As shown in FIGS. 22 and 23, this gas treatment equipment has a configuration in which the charging and agglomerating part 30 is disposed upstream, the filter part 40 is disposed downstream, and an oxidation catalyst 50 is disposed downstream from the filter part 40, a gas passage wall of the charging and agglomerating part 30 is formed of tubular bodies 31, 31a, etc., a precipitation electrode, which is a low-voltage electrode, is formed of a conductive tubular body 31f disposed in the vicinity of the surface of the gas passage wall, corona electrodes are formed of wire-like high-voltage electrodes disposed inside these tubular bodies, and the tubular body of the gas passage wall is formed as a gas cooling part where natural convection and heat radiation cool gas naturally, and further a turbulence promoting means 31e for promoting disturbance of a gas stream passing in the vicinity of an inner surface of the tubular body of the gas passage wall or the conductive tubular body is disposed on the surface of the tubular body or in the vicinity of the surface thereof. In FIGS. 22 and 23, the reference numeral 31c denotes a gas intake chamber, 31b a corona electrode, and 31d a gas outlet chamber.

The Patent Literature 3 suggests a method and an equipment capable of eliminating particulate matter PM (SOF, ISF) highly efficiently using an electrical exhaust gas treatment equipment by previously lowering the temperature of all exhaust gas containing particulate matter PM (SOF, ISF) so as to become equal to or more than 100 °C, preferably, 130 °C, and equal to or less than a temperature indicated by a ratio R of an exhaust gas temperature to a fuel boiling temperature of 0.85 by a gas cooling means and then to treat the exhaust gas by an electrical means.

On the other hand, a Non-Patent Literature 1 suggests a technique of equipping a container ship with a diesel engine in which EGR gas branching from an exhaust pipe to a turbine of a turbocharger is purified by a scrubber and cooled by an EGR cooler, and further caused to pass through a droplets collector, and then recirculated to an intercooler for intake air pressure-fed from a compressor of the turbocharger, in chapter 2 "Countermeasure technique to IMO Tier III NOx Regulations and Remaining Problem", 2-2 "Countermeasure Engine Technique to IMO Tier III NOx regulations", 2-2-2 "Exhaust Gas Circulation", p. 14-16. Here, the "IMO" recited in the Non-Patent Literature 1 is an abbreviation for "International Maritime Organization".

In addition, as a publicly-known NOx reduction technique, the SCR system mentioned above which uses a catalytic reaction is commonly known.

### Citation List

### Patent Literature

PTL 1: WO 2006/064805 B
PTL 2: Japanese Patent No. 4529013
PTL 3: Patent Application No. PCT/JP2010/068089

### Non-Patent Literature

NPTL 1: Report on examination and research on reduction technique of air pollutants emitted from watercrafts, 2009, The Japan Institute of Marine Engineering.

Prior art document WO 2004/011783 A2 concerns an after-treatment system for the capturing and removal and or destruction of diesel engine exhaust pollutants such as particulate matter, volatile organic compounds (VOCs), nano-particle count, NOx, HC, CO and SO₂ which has no electrostatic precipitation unit and comprises mainly an oxidation catalyst; an exhaust cooling system for cooling the exhaust; a diesel particulate converter for the agglomeration and separation of particulate matter; and a soot collection chamber for collecting and retaining entrapped soot; an electrical incineration mechanism; an exhaust gas re-circulation system circulating the clean exhaust leaving the particulate collection chamber to a port downstream from an engine air filter.

Prior art document US 2008/309087 A relates to the integration of gas-turbine exhaust recirculation with reduced NOx emission in a power generation system including a gas turbine system only by means of a heat recovery steam generator and a purification system.

### Summary of Invention

### Technical Problem

However, the above-described conventional diesel-engine exhaust gas purification equipments have the following drawbacks.

That is, the electrical treatment method and equipment for exhaust gas of a diesel engine described in the Patent Literature 1 has problems as follows: high flow resistance (pressure loss) due to the configuration in which the length of the electrode needle 24 in the discharging and charging part 22 is short in the flowing direction of the exhaust gas stream and the collection plate 23 is so disposed as to be perpendicular to the flowing direction of the exhaust gas stream, and in which the exhaust gas stream directly hits the collection plate 23; a possibility that since the collection plate 23 is thin and short in length in the flowing direction of the exhaust gas stream, the PM might pass through the collection plate 23 and the PM collection efficiency thus could not sufficiently be increased; and that once the PM passes through the collection plate 23, the PM may not be charged by corona discharge or collected again, and may be exhausted as it is.

In the exhaust gas treatment technique for a diesel engine that utilizes corona discharge or the like to treat the PM in exhaust gas electrically, however, there are problems described below.

That is, as for a marine diesel engine, in a case where the electrical treatment method and equipment for exhaust gas of a diesel engine described in Patent Literature 1, for example, is used in a large-displacement marine diesel engine which has a much larger displacement than an automotive diesel engine that uses diesel fuel having a low sulfur content, and which uses a low-quality fuel equivalent or inferior to fuel oil having a high sulfur content (fuel oil has about 100 to 3500 times as high a sulfur content as diesel fuel according to JIS K2204:2007 "Diesel fuel"; not more than 0.0010 mass% and JIS K2205-1991 "Fuel oil"; not more than 0.5 to 3.5 mass%), it is required to overcome the problem that the sulfur content in the low-quality fuel equivalent or inferior to fuel oil is not only contained in exhaust gas as the SOF, but also becomes sulfates to corrode engine constituent parts, in particular, exhaust-associated parts.

In addition, the technique described in Patent Literature 2 for a small-displacement diesel engine for installation in an automobile using diesel fuel that is a fuel of high quality having a low sulfur content is a technique where since the electrostatic cohesion action occurs in the vicinity of the precipitation electrode, it is unnecessary to cool the whole gas and since the electrostatic cohesion action is promoted if the vicinity of precipitation electrode can be cooled, cooling is sequentially performed only in the vicinity of the precipitation electrode to make condensing and liquefying possible, thereby resulting in charging and collecting, but, for a marine diesel engine which is of a large displacement using a low-quality fuel equivalent or inferior to fuel oil and which emits exhaust gas having a high flow velocity and a high temperature, or an engine having a large amount of PM emission, the limitation of cooling of the PM in high-temperature exhaust gas to a temperature at which the PM is condensed into liquid to local cooling only in the vicinity of the precipitation electrode provides insufficient cooling performance, which results in insufficient cooling, and if cooling of the PM cannot keep up with the supply of the PM, the PM is not cooled and remains hot, which results in exhaust of exhaust gas containing the PM. Further, in the cooling only in the vicinity of the precipitation electrode, the SOF component and the sulfate component in the exhaust gas flowing in the vicinity thereof are condensed into liquid and collected, but the exhaust gas flowing at a site distant from the precipitation electrode is hardly cooled, and accordingly the SOF component in the exhaust gas is not condensed into liquid. Therefore, the SOF component in the exhaust gas flowing at a site distant from the precipitation electrode is exhausted without being collected. Thus, if the gas treatment equipment described in Patent Literature 2, which uses diesel fuel that is a high-quality fuel having a low sulfur content, is used for the large-displacement marine diesel engine that uses a low-quality fuel equivalent or inferior to fuel oil, there is not only the problem of corrosion of engine constituent parts due to the sulfates but also the problem that the PM in exhaust gas, in particular, the SOF component is not sufficiently removed.

Further, the gas treatment equipment described in the Patent Literature 2 is a vehicle-mounted small-sized gas treatment equipment, and is directed to a technique relating to an equipment in which the charging and agglomerating part 30 is disposed upstream, the filter part 40 is disposed downstream, and the oxidation catalyst 50 is disposed downstream from the filter part 40, the charging and agglomerating part 30 is provided with a gas intake chamber 31c branching the exhaust gas into many streams, and the gas passage wall is formed of the tubular body 31f and the tubular body 31f is exposed to ambient air so that the tubular body 31f, which is the gas passage wall, is formed as a gas cooling part for cooling the gas by natural heat loss due to natural convection and heat radiation, and the branched exhaust gas streams are then mixed again in a gas outlet chamber 31d and vaporized components such as SOF, which have passed through the charging and agglomerating part 30 and then the filter part 40 in the form of gas, is oxidized and purified at the oxidation catalyst 50 downstream from the filter part 40. In addition, the gas treatment equipment described in the Patent Literature 2 is directed to a technique in that the temperature of the exhaust gas once cooled at the tubular charging and agglomerating part 30 is raised again to an activating temperature of the catalyst in order to secure an SOF collection efficiency, or it is necessary to use external energy, such as fuel or electricity, to raise the temperature of the oxidation catalyst 50, and further not a technique to reduce/eliminate nitrogen oxide in the exhaust gas.

In the electrical exhaust gas treatment equipment described in the Patent Literature 3, performing treatment by an electrical means after previously lowering the temperature of all exhaust gas containing particulate matter to equal to or more than 100 °C, preferably, 130 °C, and equal to or less than a temperature indicated by a ratio R of an exhaust gas temperature to a fuel boiling temperature of 0.85 makes it possible to eliminate particulate matter PM (SOF, ISF) charged by corona discharge highly efficiently, but the difficulty is that NOx, or sulfur oxide (called below "SOx") gaseous substance, such as sulfur dioxide gas, which does not take charge, cannot highly efficiently be eliminated.

On the other hand, in the marine diesel engine described in the Non-Patent Literature 1, recirculation of the EGR gas which branches from the exhaust gas into intake air makes it possible to reduce NOx from the exhaust gas by 80% and remove SOx from the EGR gas by approximately 100%, but the drawback is that the PM, in particular, the sulfate components, in the EGR gas cannot completely be eliminated, and, in addition, a long-term actual ship test is required to examine the effects of sulfur content still contained in the dust or PM passing through the scrubber on a diesel-engine main body or system, and it is also necessary to prevent cleaning water discharged overboard from the scrubber from affecting the environment or ecosystems, and, in particular, regarding the cleaning water of this scrubber, effluent treatment is thought to be a big problem, such as elimination or pH control of these environment-polluting components or ecosystem-affecting components involved in PM suspension, sulfur dioxide dissolution, or the like.

Further, as a publicly-known NOx reduction technique, the SCR system using a catalyst reaction is commonly known. In this SCR system, as long as the catalyst is activated with the temperature of exhaust gas of an engine kept sufficiently high, and it is ensured that the surface of the catalyst is exposed without being covered with soot or the like, the catalyst acts properly, so that significant NOx reduction can be achieved. However, in the general marine engines, in order to secure an improvement in fuel consumption rate, long-stroke low-velocity engines are the main stream, unlike automotive engines or the like, and, in many cases, the temperature of the exhaust gas becomes low due to heat dissipation due to slow, time-consuming, steady extraction of the energy of combustion gas in the cylinder, and due to long-term contact of the combustion gas with the cylinder wall face or the like, and therefore, not only during the warm-up immediately after engine start but even during steady operation, if the catalyst temperature falls below 300 °C, the catalyst does not sufficiently fulfill its function, so that the NOx reduction rate is insufficient in many cases. In addition, in a diesel engine using a low-grade fuel equal to or less than fuel oil, the problem has been pointed out that the NOx purification function of the catalyst cannot function stably for a long term because the catalyst is covered with the PM contained in the exhaust gas, and poisoned by sulfur a large amount of which is contained in the fuel, and the problem is desired to be remedied.

In view of the above-described problems of the conventional techniques, the present invention is intended to provide an exhaust gas purification equipment for a marine diesel engine using a low-grade fuel equal to or less than fuel oil and functioning just after engine starting, which reduces NOx in exhaust gas, in particular, of a large-displacement marine diesel engine using a low-grade fuel equal to or less than fuel oil and emitting exhaust gas at high speed and/or at high flow rate, and further which is not only capable of eliminating the PM, in particular, SOF component or sulfate components, highly efficiently, but also capable of suppressing discharge of environment pollutants or ecosystem-affecting substances easily and reliably.

### Solution to Problems

The invention is defined in the appended main claims 1, 6, 11.

The appended dependent claims define further aspects of the invention.

### Advantageous Effects of Invention

An exhaust gas purification equipment for a marine diesel engine using a low-grade fuel equal to or less than fuel oil according to the present invention achieves advantageous effects described below:
1. By causing part of exhaust gas emitted from a diesel particulate filter (DPF) via an exhaust gas cooler to branch to use the part as EGR gas, the exhaust gas having a high specific heat is mixed into intake air so that the combustion temperature is lowered and the generation of nitrogen oxides is suppressed, and the exhaust gas having a low oxygen concentration is mixed into the intake air so that the combustion temperature is lowered and the generation of nitrogen oxides is suppressed. As a result, NOx in the exhaust gas can be reduced significantly.
2. Because marine fuel has high sulfur content, the exhaust gas contains a high concentration of sulfate. Therefore, such a concern occurs that if the exhaust gas is supplied to the combustion chamber as EGR gas as it is, the sulfur content in the exhaust gas is further condensed, and sulfur-derived products corrode or wear out engine constituent parts, such as a piston, a piston ring, a cylinder, a cylinder head, intake/exhaust valves, or a valve system, or exhaust-relating components, such as an exhaust pipe, a muffler, an economizer, or a recuperator, which results in damage of durability of the engine and the exhaust-relating parts. However, according to the present invention, since the sulfur content due to further supply of sulfur from the EGR gas in addition to fuel-derived sulfur is hardly further condensed, it is possible to solve the concern.
3. By disposing the scrubber in the exhaust pipe, residual components such as sulfur dioxide gas or PM (soot, SOF, sulfate) which cannot be eliminated by the electrostatic cyclone exhaust gas purification equipment are effectively eliminated and further reduced so that the exhaust gas is further cleaned, and the temperature of the branching EGR gas is also further lowered so that the combustion temperature is lowered to reduce nitrogen oxides and to reduce heat dissipation from a cylinder wall face or the like, which results in improvement of fuel efficiency. Further, such advantageous effects are obtained that the heat exchanger duty of the EGR cooler can be reduced and therefore it becomes possible to reduce the size of the EGR cooler, resulting in a reduction in cost, that since an EGR cooler having high thermal resistance is not required, thermal stress lowers and the risk of high-temperature corrosion lowers, so that the structure is simplified and endurance reliability can be easily obtained, that manufacture using inexpensive materials/inexpensive methods becomes possible, so that it is possible to use an inexpensive EGR cooler, that corrosion or promotion of wear of the engine constituent parts or the exhaust-relating parts due to sulfur-derived products becomes less frequent, to that the concern that the durability of the engine and relating parts might be damaged is solved, that the EGR gas is cooled so that the EGR cooler might be unnecessary, and the like.
4. By disposing the scrubber in the EGR pipe, residual components such as PM, soot, SOF, or sulfate sulfur which has not been eliminated by the electrostatic cyclone exhaust gas purification equipment are also eliminated from the EGR gas so that clean EGR gas is obtained, and the temperature of the EGR gas is also further lowered so that the combustion temperature is lowered to reduce the generation of nitrogen oxides and to reduce heat dissipation from a cylinder wall face or the like, which results in improvement of fuel efficiency. Further, such advantageous effects are obtained that the heat exchanger duty of the EGR cooler can be reduced so that the size of the EGR cooler can be reduced, which results in reduction in cost, that since an EGR cooler having high thermal resistance is not required, thermal stress is lowered and the risk of high-temperature corrosion is reduced, so that the structure is simplified and endurance reliability can be easily obtained, that manufacture using inexpensive materials/inexpensive methods becomes possible, so that it is possible to use an inexpensive EGR cooler, that corrosion or promotion of wear of the engine constituent parts or the exhaust-relating parts due to sulfur-derived products becomes less frequent, so that the concern that the durability of the engine and relating parts might be damaged is solved, that the EGR gas is cooled so that the EGR cooler might be unnecessary, that the equipment can be reduced in size/save space, and the like;
5. By providing the steam separator, the condensed water can be preliminarily separated and eliminated. Specifically, by installing the steam separator downstream from the exhaust gas cooler, the condensed water can be separated/eliminated from the exhaust gas, and, by preliminarily eliminating the condensed water, sulfur-derived products or nitrogen-derived products are contained by the condensed water, and thereby reduced from the exhaust gas, and sulfur-derived products or nitrogen-derived products are absorbed by ISF (soot) in PM adhering to the condensed water, and thereby further reduced, so that the advantageous effect is obtained that by reducing the PM (SOF, ISF) content and the nitrogen-derived product content in the exhaust gas, the load on the DPF can be reduced and such a concern can also be further reduced that the durability of the engine parts and exhaust-relating parts can be damaged, and such an advantageous effect is particularly remarkable when the temperature of the exhaust gas emitted from the exhaust gas cooler is around 100 °C. Further, by installing the steam separator downstream from the scrubber, water content can be separated/eliminated from the exhaust gas whose humidity has become extremely high due to contact with a large amount of water in the scrubber. Since the water content separated/eliminated contains sulfur-derived products or nitrogen-derived products, these products are significantly eliminated from the exhaust gas, and further sulfur-derived products or nitrogen-derived products are absorbed and reduced by ISF (soot) in PM adhering to the water content eliminated, so that the SOx, PM (SOF, ISF), and nitrogen-derived product content in the exhaust gas is reduced and the exhaust gas is cleaned. Further, since the condensed water is also separated/eliminated from the EGR gas, particularly sulfur-derived products or the like are reduced, so that the concern can be further reduced that the durability can be damaged by corrosive wear, sliding wear, or the like of the engine parts or exhaust-relating parts;
6. Since only the EGR gas branching from the exhaust pipe is subjected to cooling, electrostatic precipitation, cyclone precipitation, scrubber treatment, and steam separation in this order, clean EGR gas is obtained at low cost with a small-sized equipment, and the EGR gas is recirculated to the intake air, so that a general function and effect of EGR can be obtained. In addition, though reduction of PM in the exhaust gas cannot be expected, the EGR gas which has been subjected to the series of treatments can be recirculated, so that NOx or SOx can be reduced reliably. Further, since only the EGR gas is treated, system constituent apparatuses (a gas cooler, an electrostatic precipitation part, a cyclone precipitation part, a scrubber treatment machine, a steam separator) are compact, light, and inexpensive, can be easily manufactured, and do not require a large installation space, which is preferred. Furthermore, system maintenance/management becomes easier than in the case of treating all exhaust gas, due to a reduction in cooling water usage in the exhaust gas cooler, a reduction in treatment quantity of effluent from or a reduction in amount of sludge from the scrubber device, a reduction in quantity of condensed water from the steam separator, and the like, so that it is possible to suppress the emission of environmental pollutants or ecosystem-affecting substances easily and reliably;
7. In the SCR system using a catalyst reaction, which is known as a publicly-known NOx reduction technique, as long as the catalyst is activated in a state where the temperature of exhaust gas of an engine is kept sufficiently high and it is ensured that the surface of the catalyst is exposed without being covered with soot or the like, the catalyst acts properly, so that significant NOx reduction can be achieved. However, in general marine engines, in order to secure an improvement in fuel consumption rate, long-stroke low-velocity engines are the main stream, unlike automotive engines or the like, and in many cases, the temperature of the exhaust gas becomes low due to heat dissipation due to slow, time-consuming, steady extraction of the energy of combustion gas in the cylinder, and due to long-term contact of the combustion gas with the cylinder wall face or the like, and therefore, not only during the warm-up immediately after engine start but even during steady operation, the catalyst temperature falls below 300 °C and the catalyst cannot sufficiently fulfill its function, and the NOx reduction rate is insufficient in many cases. Further, in a marine diesel engine using a low-grade fuel equal to or less than fuel oil, such a problem has occurred that NOx cannot be reduced stably for a long term because the catalyst is covered with PM contained in the exhaust gas, so that the catalyst is prevented from coming into contact with the exhaust gas, or because the catalyst is poisoned by sulfur a large amount of which is contained in the fuel, so that the NOx purification function of the catalyst cannot work stably. On the other hand, in the present invention equipment, each component has no temperature dependence, is not affected by PM in the exhaust gas, and is deteriorated as little as possible by sulfur-derived substances due to usage of a low-grade fuel, can fulfill the exhaust gas purification function stably for a long term immediately after engine start, so that a high NOx reduction rate can be achieved, and contribution to environmental improvement can be ensured; and
8. Since the marine diesel engine is turbocharged in one stage, or a plurality of stages, or preferably two stages, by a supercharger, such as a turbocharger, a Lysholm compressor, or a roots blower, the air excess ratio is improved due to rising of the boost pressure to the cylinder, the fuel cost can be reduced, and the EGR ratio can be raised over a wide range of operation, so that PM in a stage of being emitted to the exhaust manifold is also reduced and a desired exhaust gas purification capacity can be secured/maintained.

### Brief Description of Drawings

Figure 1 is a block diagram showing an entire configuration of a first reference embodiment equipment of the present invention;
Figure 2 is a block diagram showing an entire configuration of a second reference embodiment equipment of the present invention;
Figure 3 is a block diagram showing an entire configuration of a first embodiment equipment of the present invention;
Figure 4 is a block diagram showing an entire configuration of a second embodiment equipment of the present invention;
Figure 5 is a block diagram showing an entire configuration of a third embodiment equipment of the present invention;
Figure 6 is a block diagram showing an entire configuration of a fourth embodiment equipment of the present invention;
Figure 7 is a block diagram showing an entire configuration of a fifth embodiment equipment of the present invention;
Figure 8 is a block diagram showing an entire configuration of a third reference embodiment equipment of the present invention;
Figure 9 is a block diagram showing an entire configuration of a sixth embodiment equipment of the present invention;
Figure 10 is a block diagram showing an entire configuration of a seventh embodiment equipment of the present invention;
Figure 11 is a block diagram showing an entire configuration of an eighth embodiment equipment of the present invention;
Figure 12 is a block diagram showing an entire configuration of a ninth embodiment equipment of the present invention;
Figure 13 is a block diagram showing an entire configuration of a tenth embodiment equipment of the present invention;
Figure 14 is a block diagram showing an entire configuration of an eleventh embodiment equipment of the present invention;
Figure 15 is a block diagram showing an entire configuration of a twelfth embodiment equipment of the present invention;
Figure 16 is a block diagram showing an entire configuration of a thirteenth embodiment equipment of the present invention;
Figure 17 is a block diagram showing an entire configuration of a fourteenth embodiment equipment of the present invention;
Figure 18 is a block diagram showing an entire configuration of an equipment showing basic properties as a comparative example in the embodiments of the present invention;
Figure 19 is a block diagram showing an entire configuration of an exhaust gas purification equipment of a conventional example 1 in the embodiments of the present invention;
Figure 20 is a block diagram showing an entire configuration of an exhaust gas purification equipment of a conventional example 2 in the embodiments of the present invention;
Figure 21 is a schematic view showing an example of a conventional exhaust gas treatment equipment for a diesel engine;
Figure 22 is a perspective view showing another example of a conventional exhaust gas treatment equipment for a diesel engine; and
Figure 23 is a partially enlarged sectional view of the exhaust gas treatment equipment for a diesel engine shown in Figure 22.

### Description of Embodiments

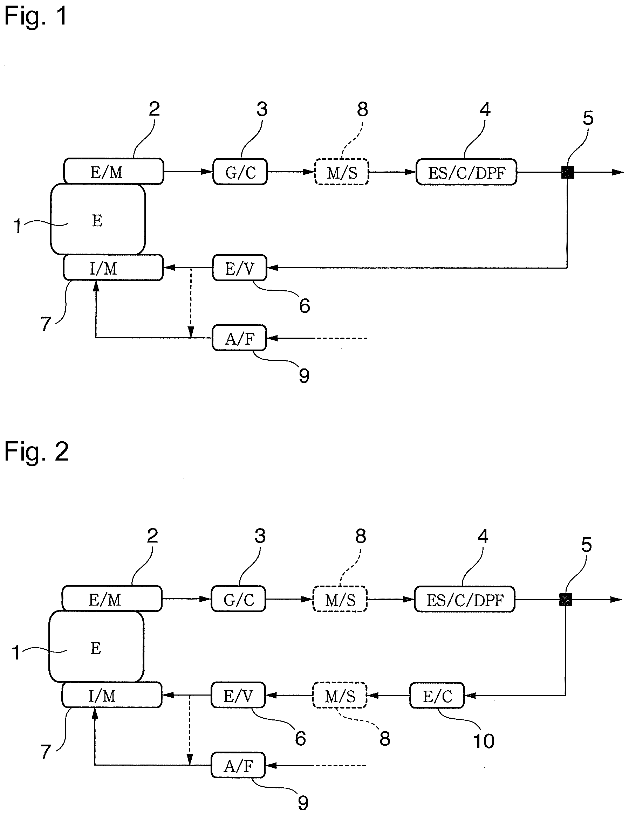

An exhaust gas purification equipment for a marine diesel engine (called below "diesel engine") shown in FIG. 1 as a first reference embodiment equipment of the present invention is configured such that an exhaust gas cooler (G/C) 3 is disposed in an exhaust pipe downstream from an exhaust manifold (E/M) 2 of a diesel engine (E) 1 using a low-grade fuel equal to or less than fuel oil as a fuel, an electrostatic cyclone exhaust gas particulate filter (ES/C/DPF (Diesel Particulate Filter)) 4 is further disposed downstream from the exhaust gas cooler (G/C) 3, a branching portion 5 for causing part of exhaust gas to branch as EGR gas is disposed in the pipe downstream from the electrostatic cyclone exhaust gas particulate filter 4, and an EGR pipe is connected to the branching portion 5, where the EGR gas is recirculated via an EGR valve (E/V) 6 to an intake manifold (I/M) 7 of the engine or to an intake pipe from an air filter (A/F) 9. Further, according to necessity, a steam separator (M/S) 8 may be disposed between the exhaust gas cooler 3 and the electrostatic cyclone diesel particulate filter 4.

In the case of the above exhaust gas purification equipment configured as shown in FIG. 1, PM (SOF, ISF) content in exhaust gas which has been cooled by the exhaust gas cooler 3 is reduced in the electrostatic cyclone diesel particulate filter 4 and part of the exhaust gas is recirculated as EGR gas to the intake manifold 7. In this exhaust gas purification equipment, if the exhaust gas which has been cooled by the exhaust gas cooler 3 is caused to pass through the steam separator 8, sulfur-derived products or nitrogen-derived products are captured in condensed water and thereby reduced from the exhaust gas, and the sulfur-derived products or nitrogen-derived products are absorbed by ISF (soot) in PM adhering to the condensed water and thereby reduced. Not only the exhaust gas is cleaned by reducing the PM (SOF, ISF) and nitrogen-derived product content in the exhaust gas, so that the load on the electrostatic cyclone diesel particulate filter 4 is reduced, but the EGR gas is also cleaned, so that the concern that the EGR gas might damage the durability of engine constituent parts and exhaust-relating parts can be further reduced.

Such an advantageous effect is particularly remarkable when the temperature of exhaust gas which is emitted from the exhaust gas cooler 3 is equal to or more than 100 °C, preferably, 130 °C, and equal to or less than a temperature indicated by a ratio R of an exhaust gas temperature to a fuel boiling temperature (exhaust gas temperature/boiling point of fuel oil fuel) of 0.85. The reason is thought to be because if the temperature of exhaust gas which is emitted from the exhaust gas cooler 3 is less than 100 °C, a large amount of water or the like in the exhaust gas is condensed on a collecting surface, PM fine particles which have been deposited on the collecting surface are caused to adhere to the collecting surface by the condensed water, it is made difficult to detach the PM fine particles from the collecting surface, and therefore the PM fine particles are made hard to flow down in a dispersing/flying state of the PM fine particles in a sandstorm-like or snowstorm-like manner in a gas stream in the exhaust gas, which results in difficulty in the following treatment. Further, it is preferred that the temperature of all exhaust gas emitted from a gas cooling part and flowing into a discharging and charging part of an electrical precipitation means be about 130 °C in view of the aftertreatment of the PM fine particles, because the above problem hardly occurs in practice.

In addition, providing a steam separator downstream from the gas cooling part and upstream from the electrostatic precipitation part is advantageous because condensed water in which vapor, SOF components, sulfate components, carbon, and the like, which have been generated by combustion from exhaust gas which has passed through the gas cooling part, have been suspended/dissolved, can be preliminarily separated and eliminated, and therefore the steam separator 8 sufficiently functions even if the temperature of all exhaust gas is cooled to about 100 °C, so that the corrosion of constituent parts after the steam separator is mitigated and it is possible to keep low the corrosion resistance of employed materials.

Further, it is preferred that the temperature of all exhaust gas emitted from a gas cooling part and flowing into a discharging and charging part of an electrical precipitation means be equal to or more than 130 °C, because the steam separator does not have to be provided since there is no need to separate and eliminate the condensed water preliminarily, so that the whole system becomes space-saving and inexpensive and that it becomes unnecessary to perform the aftertreatment of the condensed water from the steam separator and therefore the management becomes easy.

Further, the reason why the ratio R of an exhaust gas temperature to fuel boiling temperature (exhaust gas temperature/boiling point of fuel oil fuel) is set at 0.85 is because if the ratio R of an exhaust gas temperature to fuel boiling temperature exceeds 0.85, most SOF components and sulfate components cannot be liquefied. That is, it is desired that the SOF components and sulfate components in the exhaust gas which has passed through the gas cooling part be fed into the discharging and charging part in a supercooled gaseous state where a ratio R of an exhaust gas temperature to fuel boiling temperature is 0.85 or less. This is because, in a state where the ratio R is more than 0.85, a large amount of SOF components and sulfate components in a gaseous state remains and a sufficient amount of SOF components in a supercooled gaseous state in which the SOF components are liquefied by condensation and charged at the following charging and discharging part cannot be formed, so that it is impossible to obtain a sufficient purification effect.

Further, it is not necessary to eliminate the condensed water completely in the steam separator 8, and it is enough to eliminate the condensed water such that large particles are separated, for example, by causing the large particles to collides against a baffle (a separation plate), and fine liquid particles and solid particles are charged by corona discharge at a downstream stage, absorbed to a collection plate by coulomb force, and thereby collected /precipitated. Further, in the case of this exhaust gas purification equipment, recirculation to the intake manifold 7 or to the intake pipe from the air filter 9 (when the engine is equipped with a turbocharger, upstream from the compressor, though not shown) is performed by controlling the flow rate of the EGR gas through the EGR valve 6 such that that a necessary EGR ratio (a ratio of the EGR gas to the intake air filling the cylinder) is obtained. This recirculation of the EGR gas causes the combustion temperature in a combustion chamber to lower, so that generation of nitrogen oxides is suppressed.

An exhaust gas purification equipment for a diesel engine shown in FIG. 2 as a second reference embodiment equipment of the present invention is similarly configured such that an exhaust gas cooler 3 is disposed in an exhaust pipe downstream from an exhaust manifold 2 of a diesel engine 1 using a low-grade fuel equal to or less than fuel oil as a fuel, an electrostatic cyclone diesel particulate filter 4 is further disposed downstream from the exhaust gas cooler 3, a branching portion 5 for causing part of exhaust gas to branch as EGR gas is provided in the pipe downstream from the electrostatic cyclone diesel particulate filter 4, and an EGR pipe is connected to the branching portion 5, where the EGR gas which has been cooled by an EGR cooler (E/C) 10 is recirculated to an intake manifold 7 or to an intake pipe from an air filter 9 while the flow rate thereof is being controlled by an EGR valve 6. Further, according to necessity, a steam separator 8 may be disposed between the exhaust gas cooler 3 and the electrostatic cyclone diesel particulate filter 4 and/or between the EGR cooler 10 and the EGR valve 6.

In the case of the above exhaust gas purification equipment configured as shown in FIG. 2, the exhaust gas and the EGR gas are cleaned, and by installing the EGR cooler (E/C) 10, the temperature of the EGR gas is further lowered, so that it becomes easy to secure a high EGR ratio. Furthermore, the combustion temperature in the combustion chamber is further lowered, so that the generation of nitrogen oxides is further suppressed, and heat dissipation from the cylinder wall face or the like is reduced, so that the fuel consumption rate is improved. Additionally, the function of the steam separator 8 downstream from the EGR cooler 10 is almost identical to that of the steam separator 8 disposed downstream from the exhaust gas cooler 3. Further, if the temperature of the EGR gas branching from the branching portion 5 downstream from the electrostatic cyclone diesel particulate filter 4 is sufficiently low, it is made possible to prevent lowering/reduction of the flow rate of the EGR gas involved in a pressure loss due to the EGR cooler 10 by installing a bypass valve (not shown) upstream from the EGR cooler 10 in the EGR pipe and a bypass pipe (not shown) which communicates from the bypass valve downstream of the EGR cooler 10 and bypassing the EGR cooler 10 to recirculate the EGR gas.

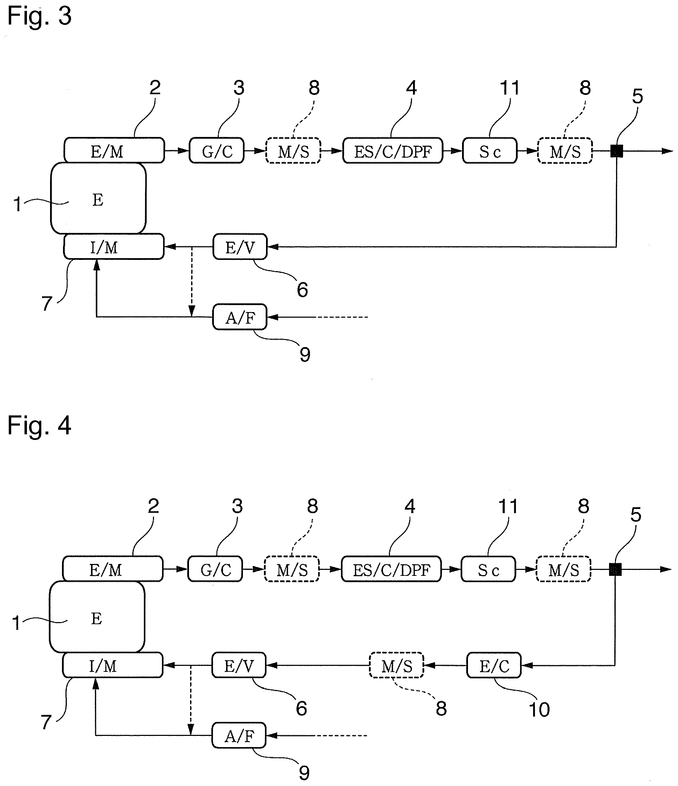

An exhaust gas purification equipment for a diesel engine shown in FIG. 3 as a first embodiment equipment of the present invention is similarly configured such that an exhaust gas cooler 3 is disposed in an exhaust pipe downstream from an exhaust manifold 2 of a diesel engine 1 using a low-grade fuel equal to or less than fuel oil as a fuel, an electrostatic cyclone diesel particulate filter 4 is disposed downstream from the exhaust gas cooler 3, a scrubber (Sc) 11 and, preferably a steam separator 8, are disposed downstream from the electrostatic cyclone diesel particulate filter 4, a branching portion 5 is disposed further downstream therefrom in the exhaust pipe to a muffler (not shown) and an EGR pipe branching EGR gas is connected to the branching portion 5, where the EGR gas is recirculated to an intake manifold 7 or to an intake pipe from an air filter 9 while the flow rate thereof is being controlled by an EGR valve 6. In addition, also in the third embodiment equipment, a steam separator 8 may be disposed between the exhaust gas cooler 3 and the electrostatic cyclone diesel particulate filter 4.

In the case of the above exhaust gas purification equipment configured as shown in FIG. 3, like the first reference embodiment equipment shown in FIG. 1, the exhaust gas is cleaned, and, by installing the scrubber (Sc) 11 and preferably the stream separator 8, residual components, such as sulfur dioxide gas or PM (soot, SOF, sulfate) which are not eliminated by the electrostatic cyclone diesel particulate filter 4 are effectively eliminated, so that the residual component content is further reduced and the exhaust gas is further cleaned, and the EGR gas which is caused to branch also becomes clean, and the temperature of the EGR gas is also further lowered. Further, the combustion temperature in the combustion chamber is further lowered, so that the generation of nitrogen oxides is further suppressed, and heat dissipation from the cylinder wall face or the like is reduced, which results in improvement of the fuel consumption rate. Further, the concern is solved that sulfur-derived products promote the wear of or corrode the constituent parts of the engine or the exhaust-relating parts, thereby deteriorating the durability of the engine and exhaust-relating parts.

An exhaust gas purification equipment for a diesel engine shown in FIG. 4 as a second embodiment equipment of the present invention is similarly configured such that an exhaust gas cooler 3, an electrostatic cyclone diesel particulate filter 4, a scrubber 11 and preferably a steam separator 8, are disposed in this order in an exhaust pipe downstream from an exhaust manifold 2 of a diesel engine 1 using a low-grade fuel equal to or less than fuel oil as a fuel, a branching portion 5 is disposed in the exhaust pipe further downstream therefrom, and an EGR pipe for branching part of the exhaust gas as EGR gas is connected to the branching portion 5, where the EGR gas which has been cooled by an EGR cooler 10 disposed in the EGR pipe is recirculated to an intake manifold 7 or to an intake pipe from an air filter 9, while the flow rate of the EGR gas is being controlled by an EGR valve 6. Additionally, also in the fourth embodiment equipment, a steam separator 8 may be disposed between the exhaust gas cooler 3 and the electrostatic exhaust gas purification equipment 4 and/or between the EGR cooler 10 and the EGR valve 6.

Also in the case of the above exhaust gas purification equipment configured as shown in FIG. 4, the exhaust gas is cleaned, and by installing the scrubber 11 and preferably the steam separator 8 in the exhaust pipe, like the first embodiment equipment shown in FIG. 3, residual components, such as sulfur dioxide gas or PM (soot, SOF, sulfate) which are not eliminated by the electrostatic cyclone diesel particulate filter 4, are effectively eliminated, so that the residual component content is further reduced and the exhaust gas is further cleaned. Additionally, the branching EGR gas is also made clean, and the temperature of the EGR gas is also further lowered. Further, by installing the EGR cooler 10 in the EGR pipe, the temperature of the EGR gas is further lowered, so that it is made easy to secure a high EGR ratio, and due to further lowering of the combustion temperature in the combustion chamber, the generation of nitrogen oxides is further suppressed, and heat dissipation from the cylinder wall face or the like is reduced, which results in improvement of the fuel consumption rate.

Additionally, also in the fourth embodiment, if the temperature of the EGR gas branching from the branching portion 5 downstream from the electrostatic cyclone diesel particulate filter 4 is sufficiently low, it is made possible to prevent lowering/reduction of the flow rate of the EGR gas involved in a pressure loss due to the EGR cooler 10 by providing a bypass valve (not shown) upstream from the EGR cooler 10 in the EGR pipe and a bypass pipe (not shown) which communicates from the bypass valve downstream of the EGR cooler 10 and bypassing the EGR cooler 10 to recirculate the EGR gas.

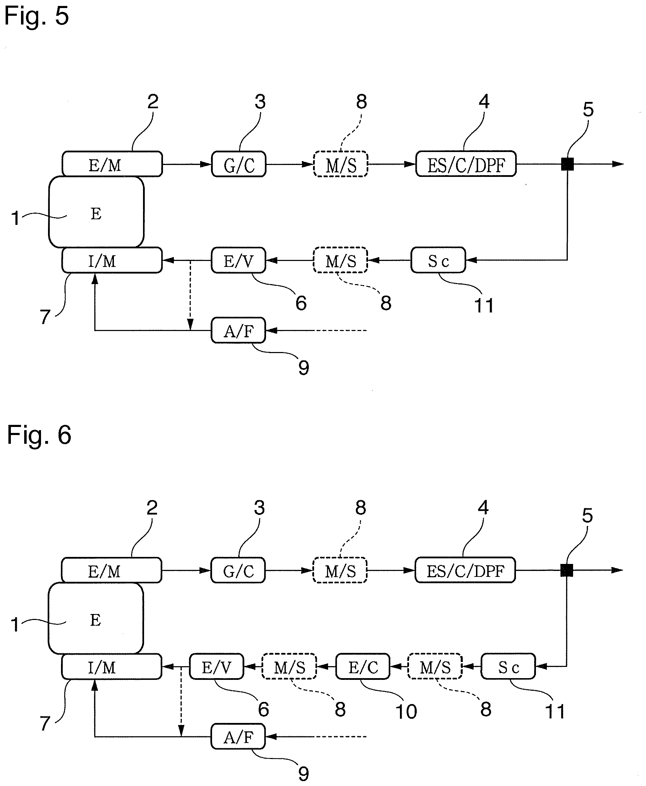

An exhaust gas purification equipment for a diesel engine shown in FIG. 5 as a third embodiment equipment of the present invention is similarly configured such that an exhaust gas cooler 3 and an electrostatic cyclone diesel particulate filter 4 are disposed in an exhaust pipe downstream from an exhaust manifold 2 of a diesel engine 1 using a low-grade fuel equal to or less than fuel oil as a fuel, a branching portion 5 is disposed in the exhaust pipe downstream from the electrostatic cyclone diesel particulate filter 4, an EGR pipe for branching part of the exhaust gas as EGR gas is connected to the branching portion 5, a scrubber 11 and preferably a steam separator 8 are disposed in the EGR pipe, where further the EGR gas is recirculated to an intake manifold 7 or to an intake pipe from an air filter 9, while the flow rate of the EGR gas is being controlled by an EGR valve 6. Additionally, in the fifth embodiment equipment, a steam separator 8 may be disposed between the exhaust gas cooler 3 and the electrostatic cyclone diesel particulate filter 4.

In the case of the above exhaust gas purification equipment configured as shown in FIG. 5, the exhaust gas is cleaned, but by installing the scrubber 11 and preferably the steam separator 8 in the EGR pipe, unlike the second embodiment equipment shown in FIG. 4, residual components, such as sulfur dioxide gas or PM (soot, SOF, sulfate) which has not been eliminated by the electrostatic cyclone diesel particulate filter 4 are effectively eliminated, so that the residual component content is further reduced, the exhaust gas is further cleaned, and the temperature of the branching EGR gas is further lowered. Further, since the temperature of the EGR gas is further lowered, it is made easy to secure a high EGR ratio, and the combustion temperature in the combustion chamber is further lowered, so that the generation of nitrogen oxides is further suppressed and heat dissipation from the cylinder wall face or the like is reduced, which results in improvement of the fuel consumption rate. Furthermore, since residual components, such as sulfur dioxide gas or PM (soot, SOF, sulfate), which are contained in the EGR gas are eliminated and reduced, the concern is solved that sulfur-derived products promote the wear of or corrode the constituent parts of the engine or the exhaust-relating parts, thereby deteriorating the durability of the engine and exhaust-relating parts. Moreover, both the scrubber 11 and the steam separator 8 installed in the exhaust pipe and the EGR pipe can be smaller in size and more inexpensive than ones that are disposed in the exhaust pipe to treat all the exhaust gas.

An exhaust gas purification equipment for a diesel engine shown in FIG. 6 as a fourth embodiment equipment of the present invention is similarly configured such that an exhaust gas cooler 3 and an electrostatic cyclone diesel particulate filter 4 are disposed in an exhaust pipe downstream from an exhaust manifold 2 of a diesel engine 1 using a low-grade fuel equal to or less than fuel oil as a fuel, a branching portion 5 is disposed in the exhaust pipe downstream from the electrostatic cyclone diesel particulate filter 4, an EGR pipe for branching part of the exhaust gas as EGR gas is connected to the branching portion 5, a scrubber 11 and preferably a steam separator 8 are disposed in the EGR pipe, and an EGR cooler 10 is further disposed downstream or upstream from the steam separator 8, where the EGR gas which has been cooled by the EGR cooler 10 is recirculated to an intake manifold 7 or to an intake pipe from an air filter 9 while the flow rate thereof is being controlled by an EGR valve 6. Further, in the sixth embodiment equipment, a steam separator 8 may be disposed between the exhaust gas cooler 3 and the electrostatic cyclone diesel particulate filter 4 and/or between the EGR cooler 10 and the EGR valve 6.

Also in the case of the above exhaust gas purification equipment configured as shown in FIG. 6, like the respective embodiment equipments and reference embodiment equipments described above, by installing the EGR cooler 10 in the EGR pipe, further clean exhaust gas and EGR gas are obtained, and the temperature of the EGR gas is further lowered, so that it is made easy to secure a high EGR ratio, and the combustion temperature in the combustion chamber is further lowered, so that the generation of nitrogen oxides is further suppressed and heat dissipation from the cylinder wall face or the like is reduced, which results in improvement of the fuel consumption rate. Additionally, the function of the steam separator 8 downstream from the EGR cooler 10 is almost identical to that of the steam separator 8 disposed downstream from the exhaust gas cooler 3 or the scrubber 11. Further, both the scrubber 11 and the steam separator 8 disposed in the EGR pipe can be small in size and inexpensive. Further, in the sixth embodiment, if the temperature of the EGR gas which has branched from the branching portion 5 downstream from the electrostatic cyclone diesel particulate filter 4 is sufficiently low, it is made possible to prevent lowering/reduction of the flow rate of the EGR gas involved in a pressure loss due to the EGR cooler 10 by providing a bypass valve (not shown) upstream from the EGR cooler 10 in the EGR pipe and a bypass pipe (not shown) which communicates from the bypass valve downstream of the EGR cooler 10 and bypassing the EGR cooler 10 to recirculate the EGR gas.

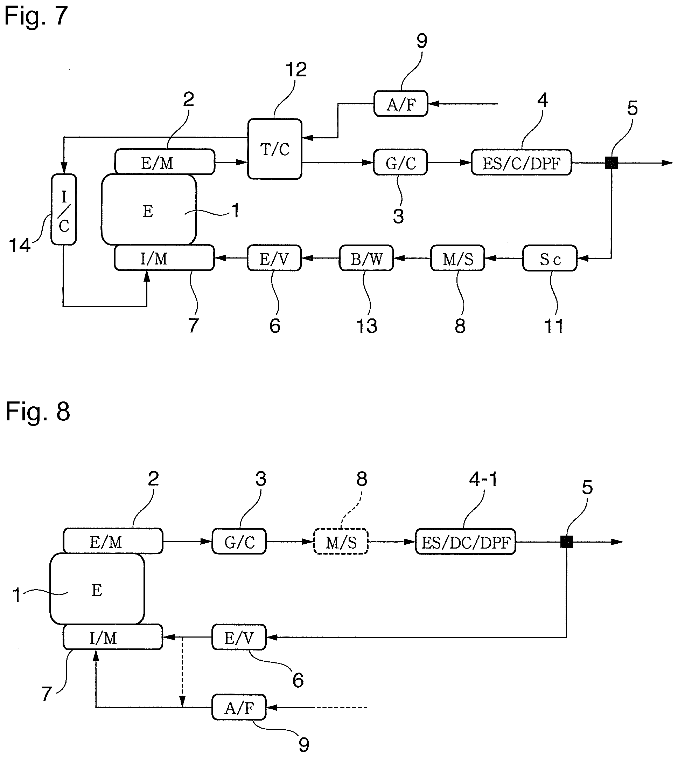

An exhaust gas purification equipment for a diesel engine shown in FIG. 7 as a fifth embodiment equipment of the present invention is configured such that a diesel engine 1 using a low-grade fuel equal to or less than fuel oil as a fuel is equipped with a turbocharger (T/C) 12,
an exhaust gas cooler 3 and an electrostatic cyclone diesel particulate filter 4 are disposed in an exhaust pipe downstream from the turbocharger 12, a branching portion 5 is disposed in the exhaust pipe downstream from the electrostatic cyclone diesel particulate filter 4, an EGR pipe for branching part of the exhaust gas as EGR gas is connected to the branching portion 5, a scrubber 11 and a steam separator 8 are disposed in the EGR pipe, and a blower (BW) 13 for boosting the pressure of the EGR gas and supplying/pressure-feeding the same is disposed downstream from the steam separator 8, where the EGR gas is recirculated to an intake manifold 7 while the flow rate thereof is being controlled by an EGR valve 6.

In the seventh embodiment equipment, a location to which the EGR gas is recirculated is the intake manifold 7, but the EGR gas may be recirculated to any location in an intake pipe (before or after an intercooler 14).

In the case of the above exhaust gas purification equipment configured as shown in FIG. 7, like the respective embodiment equipments and reference embodiment equipments described above, clean exhaust gas and EGR gas are obtained, and due to further lowering of the temperature of the EGR gas, it becomes easy to secure a high EGR ratio, and due to further lowering of the combustion temperature in the combustion chamber, the generation of nitrogen oxides is further suppressed, heat dissipation from the cylinder wall face or the like is reduced, which results in improvement of the fuel consumption rate. Besides, even if the pressure in the intake pipe is made high by the compressor, an accurate amount of EGR gas is supplied by boosting the pressure of the EGR gas by the blower 13 and pressure-feeding/supplying the EGR gas, so that it becomes possible to secure a high EGR ratio and therefore it is possible to secure/maintain a desired exhaust gas purification capacity and desired fuel consumption.

An exhaust gas purification equipment for a diesel engine shown in FIG. 8 as a third reference embodiment equipment of the present invention is configured such that an exhaust gas cooler 3 and, an electrostatic dust collector DPF (ES/DC/DPF) 4-1 instead of the above electrostatic cyclone diesel particulate filter 4, are disposed in an exhaust pipe downstream from an exhaust manifold 2 of a diesel engine 1 using a low-grade fuel equal to or less than fuel oil as a fuel, a branching portion 5 is disposed in the exhaust pipe downstream from the electrostatic dust collector DPF 4-1, and an EGR pipe for branching part of the exhaust gas as EGR gas is connected to the branching portion 5, where the EGR gas is recirculated to an intake manifold 7 or to an intake pipe from an air filter 9 while the flow rate thereof is being controlled by an EGR valve 6. It goes without saying that, in the eighth embodiment equipment, the above electrostatic cyclone diesel particulate filter 4 may be adopted instead of the electrostatic dust collector DPF 4-1 (the configuration of the eight embodiment equipment in which the electrostatic cyclone diesel particulate filter 4 is adopted is identical with that of the first embodiment equipment). In addition, a steam separator 8 may be disposed between the exhaust gas cooler 3 and the electrostatic dust collector DPF 4-1.

In the case of the above exhaust gas purification equipment configured as shown in FIG. 8, like the above first reference embodiment equipment shown in FIG. 1, if the exhaust gas which has been cooled by the exhaust gas cooler 3 is caused to pass through the steam separator 8, sulfur-derived products or nitrogen-derived products are captured by condensed water and thereby reduced from the exhaust gas, the sulfur-derived products or nitrogen-derived products are absorbed by ISF (soot) in the PM adhering to the condensed water and thereby reduced, the PM (SOF, ISF) and nitrogen-derived product content in the exhaust gas is reduced, the load on the electrostatic dust collector 4-1 is reduced, and the concern that the durability of the constituent parts of the engine and exhaust-relating parts might be damaged can be further reduced.

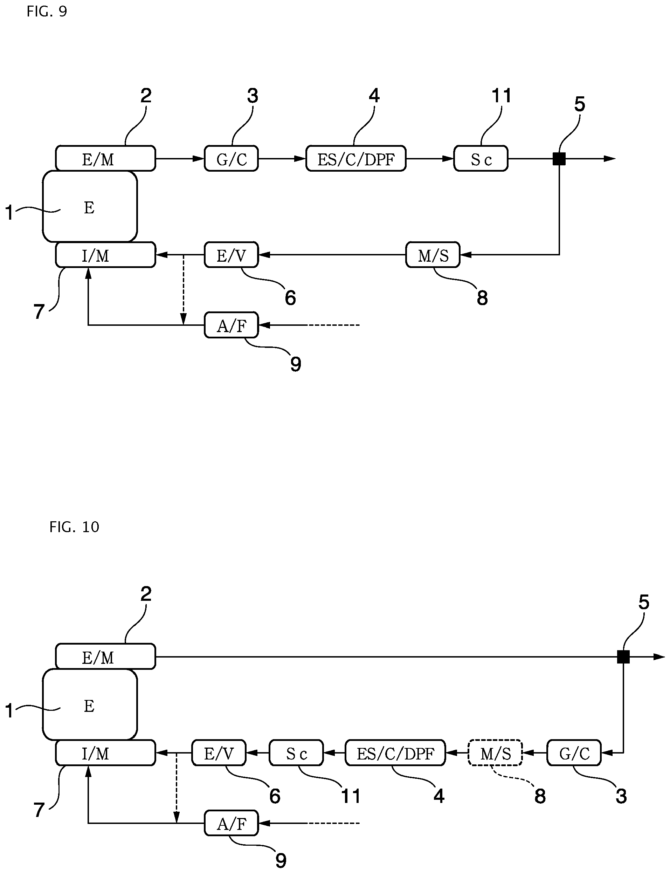

An exhaust gas purification equipment for a diesel engine shown in FIG. 9 as a sixth embodiment equipment of the present invention is configured such that an exhaust gas cooler 3, an electrostatic cyclone diesel particulate filter 4, and a scrubber 11 are disposed in an exhaust pipe downstream from an exhaust manifold 2 of a diesel engine 1 using a low-grade fuel equal to or less than fuel oil as a fuel, a branching portion 5 is disposed in the exhaust pipe downstream from the scrubber 11, an EGR pipe for branching part of the exhaust gas as EGR gas is connected to the branching portion 5, and a steam separator 8 is disposed in the EGR pipe, where the EGR gas is recirculated to an intake manifold 7 or to an intake pipe from an air filter 9 while the flow rate thereof is being controlled by an EGR valve 6.

In the case of the above exhaust gas purification equipment configured as shown in FIG. 9, further clean exhaust gas and EGR gas are obtained by eliminating residual components, such as sulfur dioxide gas or PM (soot, SOF, sulfate) which has not been eliminated by the electrostatic cyclone diesel particulate filter 4, and the EGR gas is cooled to low temperature, so that it becomes easy to secure a high EGR ratio, the combustion temperature in the combustion chamber is further lowered so that the generation of nitrogen oxides is further suppressed and heat dissipation from the cylinder wall face or the like is reduced, which results in improvement of the fuel consumption rate. Additionally, since the steam separator 8 disposed in the EGR pipe treats only the EGR gas, it can be small/light and inexpensive one.

An exhaust gas purification equipment for a diesel engine shown in FIG. 10 as a seventh embodiment equipment of the present invention is configured such that a branching portion 5 is disposed in an exhaust pipe downstream from an exhaust manifold 2 of a diesel engine 1 using a low-grade fuel equal to or less than fuel oil as a fuel, an EGR pipe for branching part of the exhaust gas as EGR gas is connected to the branching portion 5, and an exhaust gas cooler 3 and an electrostatic cyclone diesel particulate filter 4 are disposed in the EGR pipe, a scrubber 11 is disposed downstream from the electrostatic cyclone diesel particulate filter 4, where the EGR gas is recirculated to an intake manifold 7 or to an intake pipe from an air filter 9 while the flow rate thereof is being controlled by an EGR valve 6 disposed downstream of the scrubber 11. Additionally, a steam separator 8 may be disposed between the exhaust gas cooler 3 and the electrostatic cyclone diesel particulate filter 4.

Also in the case of the above exhaust gas purification equipment configured as shown in FIG. 10, like the above equipment, since the EGR gas is purified and residual components, such as sulfur dioxide gas or PM (soot, SOF, sulfate) contained, are eliminated and further reduced, the concern is solved that sulfur-derived products promote the wear of or corrode the constituent parts of the engine or the exhaust-relating parts, thereby deteriorating the durability of the engine and exhaust-relating parts. Further, since only the EGR gas is treated, all the constituent equipments of the system (a gas cooling machine, electrostatic precipitation part, a cyclone precipitation part, a scrubber processor, a steam separator, and the like) can be small/light and inexpensive apparatuses. In particular, in the tenth embodiment equipment, since system maintenance/management becomes easier than in the case of treating all exhaust gas due to a reduction in cooling water usage in the exhaust gas cooler 3, a reduction in treatment quantity of effluent from or a reduction in amount of sludge from the scrubber device, a reduction in quantity of condensed water from the steam separator 8, and the like, it is possible to suppress the emission of environmental pollutants or ecosystem-affecting substances easily and reliably.

An exhaust gas purification equipment for a diesel engine shown in FIG. 11 as an eighth embodiment equipment of the present invention is configured such that a branching portion 5 is disposed in an exhaust pipe downstream from an exhaust manifold 2 of a diesel engine 1 using a low-grade fuel equal to or less than fuel oil as a fuel, an EGR pipe for branching part of the exhaust gas as EGR gas is connected to the branching portion 5, an exhaust gas cooler 3 and an electrostatic cyclone diesel particulate filter 4 are disposed in the EGR pipe, a scrubber 11 is disposed downstream from the electrostatic cyclone diesel particulate filter 4, and an EGR cooler 10 is further disposed downstream from the scrubber 11, where the EGR gas is recirculated to an intake manifold 7 or to an intake pipe from an air filter 9 while the flow rate thereof is being controlled by an EGR valve 6. Additionally, a steam separator 8 may be disposed between the EGR cooler 10 and the EGR valve 6.

Also in the case of the above exhaust gas purification equipment configured as shown in FIG. 11, like the above equipment, since the EGR gas is purified and residual components, such as sulfur dioxide gas or PM (soot, SOF, sulfate) contained, are eliminated and further reduced, the concern is solved that sulfur-derived products promote the wear of or corrode the constituent parts of the engine or the exhaust-relating parts, thereby deteriorating the durability of the engine and exhaust-relating parts. Further, since the EGR can be recirculated, NOx can be reduced reliably. Further, since only the EGR gas is treated, all the constituent equipments of the system (a gas cooling machine, electrostatic precipitation part, a cyclone precipitation part, a scrubber processor, a steam separator, and the like) can be small/light and inexpensive apparatuses. Furthermore, also in the eleventh embodiment equipment, since system maintenance/management becomes easier than in the case of treating all exhaust gas due to a reduction in cooling water usage in the exhaust gas cooler 3, a reduction in treatment quantity of effluent from or a reduction in amount of sludge from the scrubber device, a reduction in quantity of condensed water from the steam separator 8, and the like, it is possible to suppress the emission of environmental pollutants or ecosystem-affecting substances easily and reliably.

An exhaust gas purification equipment for a diesel engine shown in FIG. 12 as a ninth embodiment equipment of the present invention is configured such that a diesel engine 1 using a low-grade fuel equal to or less than fuel oil as a fuel is equipped with a turbocharger 12, an exhaust gas cooler 3 and an electrostatic cyclone diesel particulate filter 4 are disposed in an exhaust pipe downstream from the turbocharger 12, a branching portion 5 is disposed in the exhaust pipe downstream from the electrostatic cyclone diesel particulate filter 4, an EGR pipe for branching part of the exhaust gas as EGR gas is connected to the branching portion 5, and a scrubber 11, a steam separator 8, a blower (BW) 13 for boosting the pressure of the EGR gas and supplying/pressure-feeding the EGR gas, and an EGR valve 6 are disposed in this order in the EGR pipe, where the EGR gas is recirculated to an intake pipe before an intercooler 14 while the flow rate thereof is being controlled by the EGR valve 6. That is, the twelfth embodiment equipment is configured such that the exhaust gas which has passed through the turbocharger 12 is pre-cooled, only the EGR gas which has branched from the exhaust gas after the electrostatic cyclone treatment is treated by the scrubber 11, and thereafter the EGR gas is caused to pass through the steam separator 8, pressure-fed by the blower (BW) 13, and then recirculated to the intake pipe before the intercooler 14. Incidentally, the letters I, II, III in FIG. 12 indicate measurement sites in Examples (characterization test) described later.

In the case of the above exhaust gas purification equipment configured as shown in FIG. 12, since the EGR gas is purified and residual components, such as sulfur dioxide gas or PM (soot, SOF, sulfate) contained, are eliminated and further reduced, the concern is solved that sulfur-derived products promote the wear of or corrode the constituent parts of the engine or the exhaust-relating parts, thereby deteriorating the durability of the engine and exhaust-relating parts, since the EGR gas can be recirculated, NOx can be reduced reliably, since only the EGR gas is treated, all the constituent equipments of the system (a gas cooling machine, an electrostatic precipitation part, a cyclone precipitation part, a scrubber processor, a steam separator, and the like) can be small/light and inexpensive apparatuses, and since system maintenance/management becomes easier than in the case of treating all exhaust gas due to a reduction in cooling water usage in the exhaust gas cooler 3, a reduction in treatment quantity of effluent from or a reduction in amount of sludge from the scrubber device, a reduction in quantity of condensed water from the steam separator 8, and the like, it is possible to suppress the emission of environmental pollutants or ecosystem-affecting substances easily and reliably. In addition to such advantageous effects as described above, the advantageous effect is obtained that even if the pressure in the intake pipe is made high by the compressor, an accurate amount of EGR gas is supplied by boosting the pressure of the EGR gas by the blower 13 and pressure-feeding/supplying the EGR gas, so that it becomes possible to secure a high EGR ratio and therefore it is possible to secure/maintain a desired exhaust gas purification capacity and desired fuel consumption.

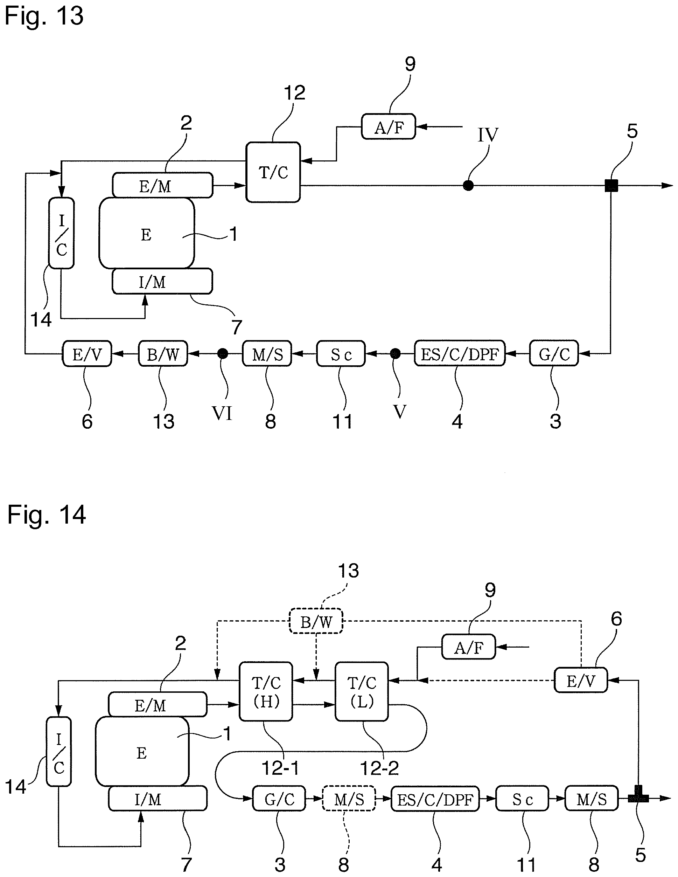

An exhaust gas purification equipment for a diesel engine shown in FIG. 13 as a tenth embodiment equipment of the present invention is configured such that a diesel engine 1 using a low-grade fuel equal to or less than fuel oil as a fuel is equipped with a turbocharger 12, a branching portion 5 is disposed in an exhaust pipe downstream from the turbocharger 12, an EGR pipe for branching part of the exhaust gas as EGR gas is connected to the branching portion 5, and an exhaust gas cooler 3, an electrostatic cyclone diesel particulate filter 4, a scrubber 11, a steam separator 8, a blower 13, and an EGR valve 6 are disposed in this order in the EGR pipe, where the EGR gas is recirculated to an intake pipe before an intercooler 14 while the flow rate thereof is being controlled by the EGR valve 6. That is, the thirteenth embodiment equipment is configured such that the EGR gas is pre-cooled in the EGR pipe, treated by the scrubber 11 after the electrostatic cyclone treatment, thereafter caused to pass through the steam separator 8, pressure-fed by the blower 13, and then recirculated to the intake pipe before the intercooler 14. Incidentally, the letters IV, V, VI in FIG. 13 indicate measurement sites in Examples (characterization test) described later.

In the case of the above exhaust gas purification equipment configured as shown in FIG. 13, like the above equipment, since the EGR gas is purified and residual components, such as sulfur dioxide gas or PM (soot, SOF, sulfate) contained, are eliminated and further reduced, the concern is solved that sulfur-derived products promote the wear of or corrode the constituent parts of the engine or the exhaust-relating parts, thereby deteriorating the durability of the engine and exhaust-relating parts, since the EGR can be recirculated, NOx can be reduced reliably, since only the EGR gas is treated, all the constituent equipment of the system (a gas cooling machine, an electrostatic precipitation part, a cyclone precipitation part, a scrubber processor, a steam separator, and the like) can be small/light and inexpensive apparatuses, and since system maintenance/management becomes easier than in the case of treating all exhaust gas due to a reduction in cooling water usage in the exhaust gas cooler 3, a reduction in treatment quantity of effluent from or a reduction in amount of sludge from the scrubber device, a reduction in quantity of condensed water from the steam separator 8, and the like, it is possible to suppress the emission of environmental pollutants or ecosystem-affecting substances easily and reliably. In addition to such advantageous effects as described above, the advantageous effect is obtained that even if the pressure in the intake pipe is made high by the compressor, an accurate amount of EGR gas is supplied by boosting the pressure of the EGR gas by the blower 13 and pressure-feeding/supplying the EGR gas, so that it becomes possible to secure a high EGR ratio and therefore it is possible to secure/maintain a desired exhaust gas purification capacity.

An exhaust gas purification equipment shown in FIG. 14 as an eleventh fourteenth embodiment equipment of the present invention is configured such that a diesel engine 1 using a low-grade fuel equal to or less than fuel oil as a fuel is equipped with a high-pressure turbocharger 12-1 in an upstream stage and a low-pressure turbocharger 12-2 in a downstream stage in a flow direction of exhaust gas as a two-stage turbocharging system, an exhaust gas cooler 3 is disposed in an exhaust pipe downstream from the low-pressure turbocharger 12-2, preferably a steam separator 8 is disposed downstream from the exhaust gas cooler 3, an electrostatic cyclone diesel particulate filter 4, a scrubber 11 and preferably a steam separator 8 are disposed further downstream from the exhaust gas cooler 3, preferably the steam separator 8, and an EGR pipe for branching EGR gas is connected to a branching portion 5 disposed in the exhaust pipe to a muffler (not shown) downstream from the steam separator 8, where the EGR gas is recirculated to an intake pipe in a low-pressure position upstream from a compressor (not shown) of the low-pressure turbocharger 12-2, or to an intake pipe in an intermediate-pressure position between the high-pressure turbocharger 12-1 and the low-pressure turbocharger 12-2 by pressure-feeding performed by the blower 13, or to an intake pipe in a high-pressure position downstream from a compressor (not shown) of the high-pressure turbocharger 12-1 by pressure-feeding performed by the blower 13.

In the case of the above exhaust gas purification equipment configured as shown in FIG. 14, like the first reference embodiment equipment shown in FIG. 1, the exhaust gas is cleaned, and by installing the scrubber 11 and preferably the steam separator 8 in the exhaust pipe, residual components, such as sulfur dioxide gas or PM (soot, SOF, sulfate) which is not eliminated by the electrostatic cyclone diesel particulate filter 4 are effectively eliminated, and therefore the residual component content is further reduced and the exhaust gas is further cleaned. Additionally, the EGR gas which is caused to branch also is made clean and the temperature of the EGR gas is also further lowered. Further, the combustion temperature in the combustion chamber is further lowered, so that the generation of nitrogen oxides is further suppressed, and heat dissipation from the cylinder wall face or the like is reduced, which results in improvement of the fuel consumption rate. Further, the concern is solved that sulfur-derived products promote the wear of or corrode the constituent parts of the engine or the exhaust-relating parts, thereby deteriorating the durability of the engine and exhaust-relating parts. Furthermore, since the engine is turbocharged in two stages, boost pressure is raised and the air excess ratio is improved, the fuel cost is reduced, the EGR ratio can be raised over a wide range of operation, PM in a stage of emission to the exhaust manifold is also reduced, and the advantageous effect is obtained that a desired exhaust gas purification capacity can be secured/maintained.

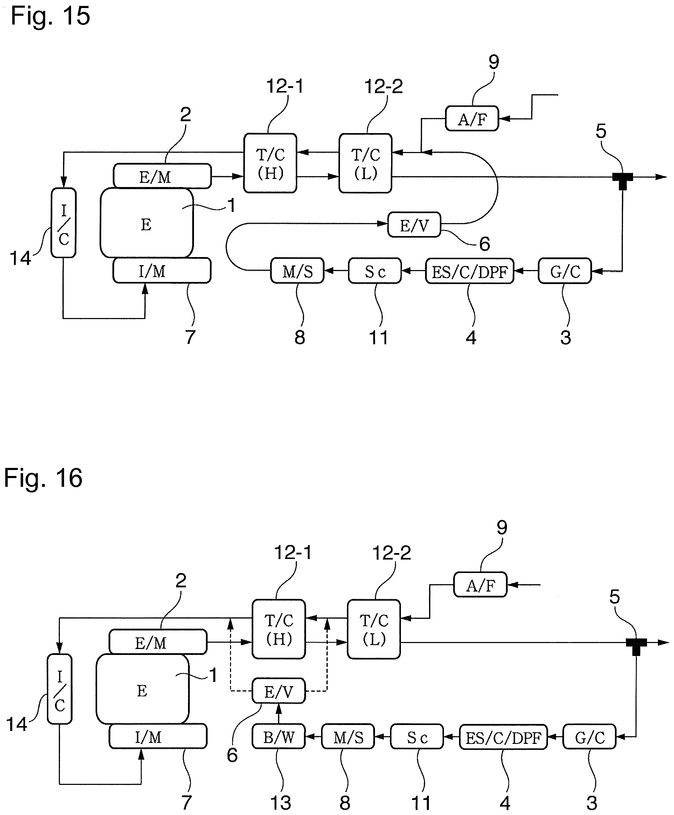

An exhaust gas purification equipment for a diesel engine shown in FIG. 15 as a twelfth embodiment equipment of the present invention is similarly configured such that a diesel engine 1 using a low-grade fuel equal to or less than fuel oil as a fuel is equipped with a high-pressure turbocharger 12-1 in an upstream stage and a low-pressure turbocharger 12-2 in a downstream stage in a flow direction of exhaust gas as a two-stage turbocharging system, a branching portion 5 is disposed in an exhaust pipe downstream from the low-pressure turbocharger 12-2, an EGR pipe for branching part of the exhaust gas as EGR gas is connected to a branching portion 5, and an exhaust gas cooler 3, an electrostatic cyclone diesel particulate filter 4, a scrubber 11, a steam separator 8, and an EGR valve 6 are disposed in this order in the EGR pipe, where the EGR gas is recirculated and supplied to an intake pipe in a low-pressure position upstream from a compressor (not shown) of the low-pressure turbocharger 12-2 together with intake air from an air filter 9, while the flow rate thereof is being controlled by the EGR valve 6.

In the case of the above exhaust gas purification equipment configured as shown in FIG. 15, like the above equipment, since the EGR gas is purified and residual components, such as sulfur dioxide gas or PM (soot, SOF, sulfate) contained, are eliminated and further reduced, the concern is solved that sulfur-derived products promote the wear of or corrode the constituent parts of the engine or the exhaust-relating parts, thereby deteriorating the durability of the engine and exhaust-relating parts, since the EGR can be recirculated, NOx can be reduced reliably, since only the EGR gas is treated, all the constituent equipment of the system (a gas cooling machine, an electrostatic precipitation part, a cyclone precipitation part, a scrubber processor, a steam separator, and the like) can be small/light and inexpensive apparatuses, and since system maintenance/management becomes easier than in the case of treating all exhaust gas due to a reduction in cooling water usage in the exhaust gas cooler 3, and the like, it is possible to suppress the emission of environmental pollutants or ecosystem-affecting substances easily and reliably. In addition to such advantageous effects as described above, since the engine is turbocharged in two stages, the advantageous effect is obtained that boost pressure is raised and the air excess ratio is improved, the fuel cost is reduced, the EGR ratio can be raised over a wide range of operation, PM in a stage of emission to the exhaust manifold is also reduced, and a desired exhaust gas purification capacity can be secured/maintained.

An exhaust gas purification equipment for a diesel engine shown in FIG. 16 as a thirteenth embodiment equipment of the present invention is similarly configured such that a diesel engine 1 using a low-grade fuel equal to or less than fuel oil as a fuel is equipped with a high-pressure turbocharger 12-1 in an upstream stage and a low-pressure turbocharger 12-2 in a downstream stage in a flow direction of exhaust gas as a two-stage turbocharging system, a branching portion 5 is disposed in an exhaust pipe downstream from the low-pressure turbocharger 12-2, an EGR pipe for branching part of the exhaust gas as EGR gas is connected to a branching portion 5, and an exhaust gas cooler 3, an electrostatic cyclone diesel particulate filter 4, a scrubber 11, a steam separator 8, a blower 13, and an EGR valve 6 are disposed in this order in the EGR pipe, where the EGR gas pressure-fed by the blower is recirculated to an intake pipe in an intermediate-pressure position between the high-pressure turbocharger 12-1 and the low-pressure turbocharger 12-2 or downstream from a compressor (not shown) of the high-pressure turbocharger 12-1 while the flow rate thereof is being controlled by the EGR valve 6.

In the case of the above exhaust gas purification equipment configured as shown in FIG. 16, like the above equipment, since the EGR gas is purified and residual components, such as sulfur dioxide gas or PM (soot, SOF, sulfate) contained, are eliminated and further reduced, the concern is solved that sulfur-derived products promote the wear of or corrode the constituent parts of the engine or the exhaust-relating parts, thereby deteriorating the durability of the engine and exhaust-relating parts, since the EGR can be recirculated, NOx can be reduced reliably, since only the EGR gas is treated, all the constituent equipments of the system (a gas cooling machine, an electrostatic precipitation part, a cyclone precipitation part, a scrubber processor, a steam separator, and the like) can be small/light and inexpensive apparatuses, and since system maintenance/management becomes easier than in the case of treating all exhaust gas due to a reduction in cooling water usage in the exhaust gas cooler 3, a reduction in treatment quantity of effluent from or a reduction in amount of sludge from the scrubber device, a reduction in quantity of condensed water from the steam separator 8, and the like, it is possible to suppress the emission of environmental pollutants or ecosystem-affecting substances easily and reliably. In addition to such advantageous effects as described above, since the blower 13 raises the pressure of the EGR gas and thereby pressure-feeds/supplies the EGR gas, an accurate amount of EGR gas is supplied even if the pressure in the intake pipe is made high by the compressor, so that it becomes possible to secure a high EGR ratio, and, since the engine is turbocharged in two stages, boost pressure is raised and the air excess ratio is improved, so that not only the fuel cost is reduced, but the EGR ratio can also be raised over a wide range of operation, and PM in a stage of emission to the exhaust manifold is also reduced, so that the advantageous effect is obtained that a desired exhaust gas purification capacity can be secured/maintained.

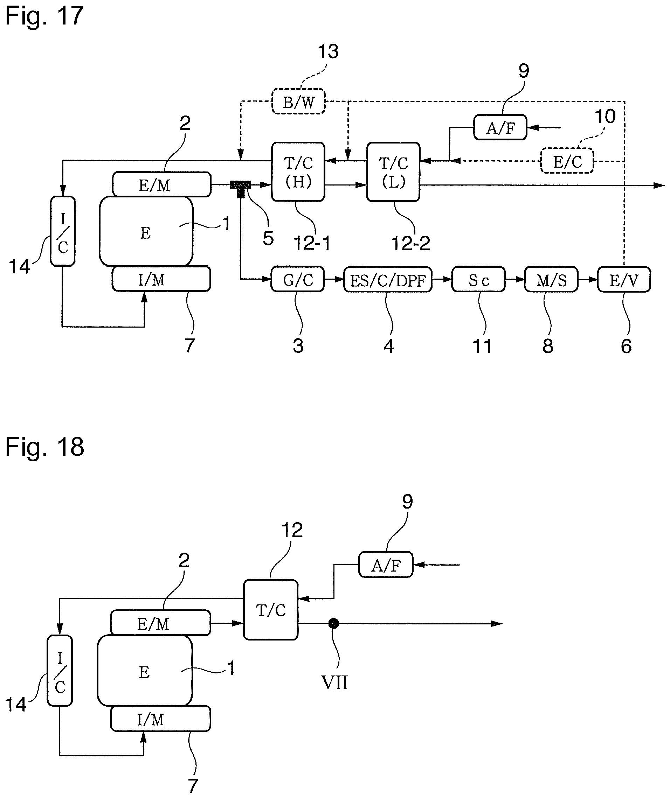

An exhaust gas purification equipment for a diesel engine shown in FIG. 17 as a fourteenth embodiment equipment of the present invention is similarly configured such that a diesel engine 1 using a low-grade fuel equal to or less than fuel oil as a fuel is equipped with a high-pressure turbocharger 12-1 in an upstream stage and a low-pressure turbocharger 12-2 in a downstream stage in a flow direction of exhaust gas as a two-stage turbocharging system, a branching portion 5 is disposed in an exhaust pipe upstream from the high-pressure turbocharger 12-1, an EGR pipe for branching part of the exhaust gas as EGR gas is connected to the branching portion 5, and an exhaust gas cooler 3, an electrostatic cyclone diesel particulate filter 4, a scrubber 11, a steam separator 8, and an EGR valve 6 are disposed in this order in the EGR pipe, where the EGR gas is recirculated and supplied to a low-pressure position in an intake pipe upstream from a compressor (not shown) of the low-pressure turbocharger 12-2, or recirculated and supplied to an intermediate-pressure position in an intake pipe between the high-pressure turbocharger 12-1 and the low-pressure turbocharger 12-2, or recirculated to a high-pressure position in an intake pipe downstream from a compressor (not shown) of the high-pressure turbocharger 12-1 preferably by pressure-feeding performed by the blower 13, together with intake air from an air filter 9, while the flow rate thereof is being controlled by an EGR valve 6. That is, the seventeenth embodiment equipment is configured such that the EGR gas is pre-cooled in the EGR gas pipe branching from a position upstream from a turbine (not shown) of the high-pressure turbocharger 12-1 immediately below the manifold, subjected to electrostatic cyclone treatment and then treated by the scrubber 11, thereafter caused to pass through the steam separator 8, and then recirculated, preferably via an EGR cooler 10 and/or the blower 13, while the flow rate thereof is being controlled by the EGR valve 6.

Also in the case of the above exhaust gas purification equipment configured as shown in FIG. 17, like the exhaust gas purification equipment shown in FIG. 16, since the EGR gas is purified and residual components, such as sulfur dioxide gas or PM (soot, SOF, sulfate) contained, are eliminated and further reduced, the concern is solved that sulfur-derived products promote the wear of or corrode the constituent parts of the engine or the exhaust-relating parts, thereby deteriorating the durability of the engine and exhaust-relating parts, since the EGR can be recirculated, NOx can be reduced reliably, since only the EGR gas is treated, all the constituent equipment of the system (a gas cooling machine, an electrostatic precipitation part, a cyclone precipitation part, a scrubber treatment machine, a steam separator, and the like) can be small/light and inexpensive apparatuses, and since system maintenance/management becomes easier than in the case of treating all exhaust gas due to a reduction in cooling water usage in the exhaust gas cooler 3, a reduction in treatment quantity of effluent from or a reduction in amount of sludge from the scrubber device, a reduction in quantity of condensed water from the steam separator 8, and the like, it is possible to suppress the emission of environmental pollutants or ecosystem-affecting substances easily and reliably. In addition to such advantageous effects as described above, since the blower 13 raises the pressure of the EGR gas and thereby pressure-feeds/supplies the EGR gas, an accurate amount of EGR gas is supplied even if the pressure in the intake pipe is made high by the compressor, so that it becomes possible to secure a high EGR ratio, and, since the engine is turbocharged in two stages, boost pressure is raised and the air excess ratio is improved, so that not only the fuel cost is reduced, but the EGR ratio can also be raised over a wide range of operation, and PM in a stage of emission to the exhaust manifold is also reduced, so that the advantageous effect is obtained that a desired exhaust gas purification capacity can be secured/maintained.

In the above embodiment equipments shown in FIGS. 14 to 17, in order to treat the EGR gas that has branched from the exhaust pipe by the electrostatic cyclone diesel particulate filter, the EGR gas branches in a high-pressure position upstream from a turbine of the high-pressure turbocharger 12-1 or in a low-pressure position downstream from a turbine of the low-pressure turbocharger 12-2 by way of example, but it goes without saying that the EGR gas may branch from an intermediate-pressure position between the high-pressure turbocharger 12-1 and the low-pressure turbocharger 12-2.

Additionally, the configuration of the exhaust gas purification equipment for a diesel engine using a low-grade fuel equal to or less than fuel oil as fuel is not limited to those of the first to fourteenth embodiment equipments.

### <Example>

Next, the present invention will be described in detail with use of Examples.

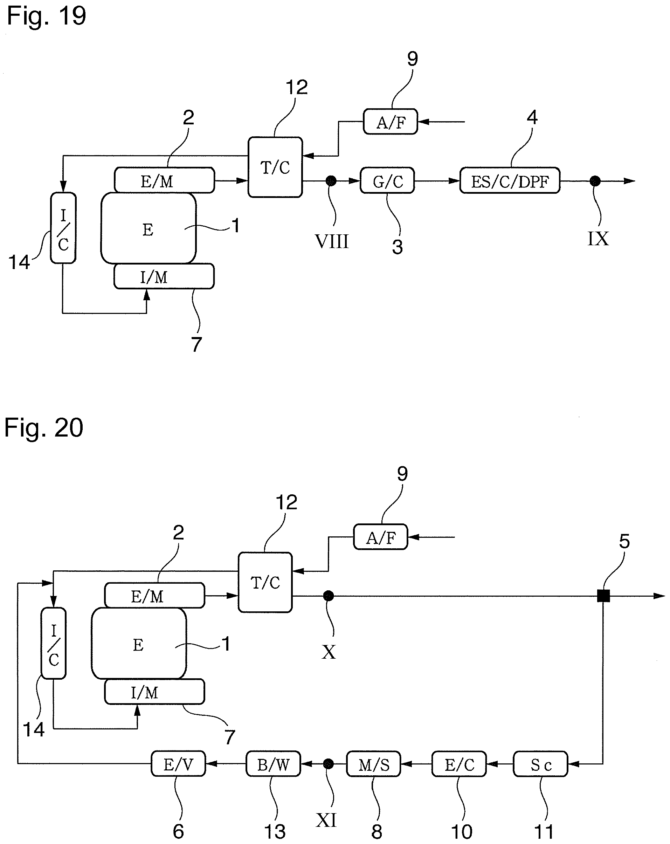

In order to confirm the advantageous effects of the present invention, the following tests for a marine diesel engine were implemented under conditions shown in Table 1 (use of a low-grade fuel made by adding sulfur to fuel oil of Grade A until the total mass% of sulfur reaches 2.1 mass%), and the properties of exhaust gas in each of Examples are shown in Table 2. In Table 2, Basic Properties show a result of the test using an equipment having the configuration shown in FIG. 18 not having any exhaust gas purification equipment, Conventional Example 1 shows a result of the test using the exhaust gas purification equipment for a diesel engine shown in FIG. 19 having a configuration based on Patent Literature 3, and Conventional Example 2 shows a result of the test using the exhaust gas purification equipment for a diesel engine shown in FIG. 20 having a configuration based on Non-Patent Literature 1, respectively. In addition, Present Inventions 1, 2 show results of the test using the ninth embodiment equipment shown in FIG. 12, and similarly Present Inventions 3, 4 show results of the test using the tenth embodiment equipment shown in FIG. 13, respectively.

Additionally, in Table 2, the respective values of PM, SOx, and NOx concentrations are the ratios of the respective concentrations to Basic Properties, which are expressed in percentage.

### Examples 1, 2

In Examples corresponding to Present Inventions 1, 2, in the ninth embodiment equipment shown in FIG. 12, namely, in the exhaust gas purification equipment configured in such a manner that exhaust gas after passing through the turbocharger 12 was pre-cooled by the exhaust gas cooler 3, then EGR gas which had branched after purification treatment by the electrostatic cyclone diesel particulate filter 4 was treated by the scrubber 11, and then caused to pass through the steam separator 8, pressure-fed by the blower 13, and recirculated to the intake pipe before the intercooler 14 while the flow rate thereof was being controlled by the EGR valve 6, the temperatures of the exhaust gas, the temperature of the EGR gas, and the respective concentration values of PM, SOx, and NOx were measured at the measurement sites I, II, III.

### Examples 3, 4

In Examples corresponding to Present Inventions 3, 4, in the tenth embodiment equipment shown in FIG. 13, namely, in the exhaust gas purification equipment configured in such a manner that exhaust gas after passing through the turbocharger 12 was caused to branch as EGR gas from the exhaust pipe without being treated, only the EGR gas was treated through the exhaust gas cooler 3, the electrostatic cyclone diesel particulate filter 4, the scrubber 11, and the steam separator 8, then pressure-fed by the blower 13, and recirculated to the intake pipe before the intercooler 14 while the flow rate thereof was being controlled the EGR valve 6, the temperatures of the exhaust gas, the temperature of the EGR gas, and the respective concentration values of PM, SOx, and NOx were measured at the measurement sites IV, V, VI.

### Basic Properties

In an equipment having the configuration shown in FIG. 18 which did not have any exhaust gas purification equipment, the temperature of exhaust gas and the respective concentration values of PM, SOx, and NOx were measured at a measurement site VII downstream from the turbocharger 12 of the diesel engine 1.

### Conventional Example 1

In Conventional Example 1, in the exhaust gas purification equipment for a diesel engine shown in FIG. 19 having the configuration based on Patent Literature 3, namely, in the exhaust gas purification equipment configured such that the exhaust gas cooler 3 was disposed downstream from the turbocharger 12 and where the exhaust gas which had been cooled by the cooler was treated by the electrostatic cyclone diesel particulate filter 4, the temperature of the exhaust gas and the respective concentration values of PM, SOx, and NOx were measured at measurement sites VIII, IX.

### Conventional Example 2

In Conventional Example 2, in the exhaust gas purification equipment for a diesel engine shown in FIG. 20 having the configuration based on Non-Patent Literature 1, namely, in the exhaust gas purification equipment configured in such a manner that, after EGR gas was caused to branch from the exhaust pipe downstream from the turbocharger 12, the EGR gas was purified by the scrubber 11, then cooled by the EGR cooler 10, treated through the steam separator, and then pressure-fed by the blower 13 and recirculated to the intake pipe before the intercooler 14 while the flow rate thereof was being controlled by the EGR valve 6, the temperature of the exhaust gas, the temperature of the EGR gas, and the respective concentration values of PM, SOx, and NOx were measured at measurement sites X, XI.

**[Table 1]**

| |
|---|
| Engine: |
| Stroke: Four-stroke type |
| Cylinder Number: Three |
| Bore stroke: 130 mm × 160 mm |
| Turbocharger and Intercooler: Equipped |
| Output: 100 PS × 1200 rpm |
| EGR ratio: 30% |
| Fuel: Fuel Oil of Grade A + Sulfur Addition (Total mass% of Sulfur Content: 2.1) |
| Load Factor: 75% |
| Operation Hours: 100 hrs |
| Exhaust Gas Cooler: Water-Cooling |
| Electrostatic Cyclone Diesel Particulate Filter: |
| (1) Tubular collecting part: Inner Diameter ∅ 400 mm × Length 3000 mm |
| (2) Electrostatic Voltage: DC -45000 V |
| (3) Cyclone collecting part: Drum Diameter ∅ 260 mm |

**[Table 2]**

| | Measurement Site | Temperature (°C) | PM Concentration (%) | SOx Concentration (%) | NOx Concentration (%) |
|---|---|---|---|---|---|
| Basic Properties | VII in FIG. 18 | 450 | 100 | 100 | 100 |
| Conventional Example 1 | VIII in FIG. 19 | 455 | 98 | 101 | 103 |
| | IX in FIG. 19 | 112 | 4 | 93 | 99 |
| Conventional Example 2 | X in FIG. 20 | 447 | 102 | 98 | 21 |
| | XI in FIG. 20 | 40 | 82 | approx. 0 | 20 |
| Present Invention 1 | I in FIG. 12 | 445 | 98 | 99 | 19 |
| | II in FIG. 12 | 113 | 5 | 90 | 18 |
| | III in FIG. 12 | 38 | equal to or less than 1 | approx. 0 | 16 |
| Present Invention 2 | I in FIG. 12 | 456 | 100 | 102 | 20 |
| | II in FIG. 12 | 152 | 7 | 93 | 19 |
| | III in FIG. 12 | 48 | 2 | approx. 0 | 17 |
| Present Invention 3 | IV in FIG. 13 | 453 | 101 | 101 | 18 |
| | V in FIG. 13 | 108 | 3 | 90 | 17 |
| | VI in FIG. 13 | 45 | equal to or less than 1 | approx. 0 | 16 |
| Present Invention 4 | IV in FIG. 13 | 447 | 98 | 100 | 21 |
| | V in FIG. 13 | 152 | 6 | 89 | 18 |
| | VI in FIG. 13 | 52 | 3 | approx. 0 | 17 |

As is obvious from Table 2, the following findings were obtained:
(1) In the technique according to Basic Properties, since any exhaust gas purification equipment was not provided at all, PM, SOx, and NOx, of course, were not reduced. Here, the respective concentrations of PM, SOx, and NOx are set as references (100%);
(2) In Conventional Example 1, since the exhaust pipe was equipped with the exhaust gas cooler and the electrostatic cyclone diesel particulate filter, PM was eliminated, but, since EGR was not implemented, only a slight amount of SOx and NOx was reduced, and therefore complete elimination of components threatening the reliability of the engine or ecosystem-affecting components cannot be expected;
(3) In Conventional Example 2, since EGR was implemented, NOx in the exhaust gas was reduced, but PM and SOx were not reduced. However, since the EGR gas was caused to pass through the scrubber and the steam separator, components of the EGR gas threatening the reliability of the engine, such as SOx, were reduced. Additionally, since the EGR gas was caused to pass through the scrubber and the steam separator, PM was reduced a little but not sufficiently;
(4) In Present Inventions 1, 2, since the exhaust gas cooler and the electrostatic cyclone diesel particulate filter were disposed in the exhaust pipe, and further EGR was implemented, both NOx and PM in the exhaust gas were able to be reduced, and, since the EGR gas was caused to pass through the scrubber and the steam separator, components of the EGR gas threatening the reliability of the engine, such as SOx, were reduced, and further, since PM in the exhaust gas was preliminarily reduced, the problem of effluent treatment of the scrubber was able to be solved; and
(5) In Present Inventions 3, 4, since the exhaust gas cooler, the electrostatic diesel particulate filter, the scrubber, and the steam separator were disposed in the EGR exhaust pipe, NOx in the EGR gas as well as PM and SOx threatening the reliability of the engine in the EGR gas were able to be reduced. As a result, PM reduction in the exhaust gas cannot be expected, but it is possible to reduce NOx in the exhaust gas without threatening the reliability of the engine, and it is also possible to solve the problem of effluent treatment of the scrubber.

As described above, according to the present invention, since the EGR gas is recirculated to the intake air and since the exhaust gas cooler and the electrostatic cyclone diesel particulate filter are disposed in the exhaust pipe, NOx in the exhaust gas and PM in the exhaust gas can be significantly reduced, respectively, and harmful components such as SOx in the EGR gas can also be reduced, so that it is possible to solve problems, such as environmental destruction, negative effects on ecosystems, or negative effects due to corrosion or wear on engine constituent parts or the like. Further, in an SCR system known as a publicly-known NOx reduction technique using a catalyst reaction, as described before, as long as the catalyst is activated in such a state that the temperature of exhaust gas of an engine is kept sufficiently high and it is ensured that the surface of the catalyst is exposed without being covered with soot or the like, the catalyst acts properly, so that significant NOx reduction can be achieved. However, in general marine engines, in order to secure an improvement in fuel consumption rate, long-stroke low-velocity engines are the main stream, unlike automotive engines or the like, and in many cases the temperature of the exhaust gas becomes low temperature, and therefore, not only during the warm-up immediately after engine start but also even during steady operation, the catalyst temperature falls below 300 °C and the catalyst cannot sufficiently fulfill its function. Further, in a marine diesel engine using a low-grade fuel equal to or less than fuel oil, the problem has occurred that NOx cannot be reduced stably for a long term because the catalyst is covered with PM contained in the exhaust gas, so that the catalyst is prevented from coming into contact with the exhaust gas, or because the catalyst is poisoned by sulfur a large amount of which is contained in the fuel, so that the NOx purification function of the catalyst cannot work stably. On the other hand, in the present invention equipment, each component has no temperature dependence, is not affected by PM in the exhaust gas, and is deteriorated as little as possible by sulfur-derived substances due to usage of a low-grade fuel, can fulfill the exhaust gas purification function stably for a long term immediately after engine start, so that a high NOx reduction rate can be achieved, and contribution to environmental improvement can be ensured.

### Reference Signs List

1...marine diesel engine,
2...exhaust manifold,
3...exhaust gas cooler,
4...electrostatic cyclone diesel particulate filter,
4-1...electrostatic dust collector diesel particulate filter,
5...branching portion,
6...EGR valve,
7...intake manifold,
8...steam separator,
9...air filter,
10...EGR cooler,
11...scrubber,
12...turbocharger,
12-1...high-pressure turbocharger,
12-2...low-pressure turbocharger,
13...blower,
14...intercooler,
I; II; III; IV; V; VI; VII; VIII; IX; X; XI
   ...measurement site.

## Claims

1. An exhaust gas purification equipment for a marine diesel engine using a low-grade fuel equal to or less than fuel oil, comprising an exhaust gas cooler (3) is provided in an exhaust pipe which communicates with an exhaust manifold (2) of the engine (1), **characterized in that** said purification equipment comprises an electrostatic cyclone diesel particulate filter (4) that includes an electrostatic precipitation part and a cyclone precipitation part different from the electrostatic precipitation part and eliminates PM (particulate matter) mainly including soluble organic fractions (SOF) and insoluble organic fractions (ISF) contained in the exhaust gas is disposed downstream from the exhaust gas cooler (3), a scrubber treatment machine (11) that contacts with a large amount of water and further purifies the exhaust gas is disposed downstream from the electrostatic cyclone diesel particulate filter (4), and a branching portion (5) for causing part of the exhaust gas to branch as EGR gas is disposed in a portion of the exhaust pipe positioned downstream from the scrubber treatment machine (11), so that the EGR gas is recirculated to intake air of the engine (1) via an EGR pipe which communicates with the branching portion (5) and an EGR valve (6).

2. The exhaust gas purification equipment for a marine diesel engine using a low-grade fuel equal to or less than fuel oil according to claim 1, wherein an EGR cooler (10) for cooling the EGR gas is disposed in the EGR pipe.

3. The exhaust gas purification equipment for a marine diesel engine using a low-grade fuel equal to or less than fuel oil according to claim 1 or 2, wherein a steam separator (8) for separating and eliminating condensed water from the exhaust gas or the EGR gas is disposed in at least one of the exhaust pipe between the exhaust gas cooler (3) and the electrostatic cyclone diesel particulate filter (4), the exhaust pipe or EGR pipe between the scrubber treatment machine (11) and the EGR cooler (10), and the EGR pipe after the EGR cooler (10).

4. The exhaust gas purification equipment for a marine diesel engine using a low-grade fuel equal to or less than fuel oil according to any one of claims 1 to 3, wherein a blower (13) for pressure-feeding the EGR gas to recirculate the EGR gas to the intake air is disposed in the EGR pipe.

5. The exhaust gas purification equipment for a marine diesel engine using a low-grade fuel equal to or less than fuel oil according to any one of claims 1 to 4, wherein the diesel engine is equipped with a turbocharging system in which a one-stage or multi-stage turbocharger boosts intake air.

6. An exhaust gas purification equipment for a marine diesel engine using a low-grade fuel equal to or less than fuel oil, wherein a branching portion (5) for causing part of exhaust gas to branch as EGR gas is disposed in an exhaust pipe which communicates with an exhaust manifold (2) of the engine (1), and an exhaust gas cooler (3) is disposed in an EGR pipe which communicates with the branching portion (5), **characterized in that** said purification equipment comprises an electrostatic cyclone diesel particulate filter (4) that includes an electrostatic precipitation part and a cyclone precipitation part different from the electrostatic precipitation part and eliminates PM (particulate matter) mainly including soluble organic fractions (SOF) and insoluble organic fractions (ISF) contained in the exhaust gas is disposed downstream from the exhaust gas cooler (3), and a scrubber treatment machine (11) that contacts with a large amount of water and further purifies the exhaust gas is disposed downstream from the electrostatic cyclone diesel particulate filter (4), so that the EGR gas is recirculated to intake air of the engine (1) via an EGR valve (6) disposed downstream from the scrubber treatment machine (11).

7. The exhaust gas purification equipment for a marine diesel engine using a low-grade fuel equal to or less than fuel oil according to claim 6, wherein an EGR cooler (10) for cooling the EGR gas is disposed after the scrubber treatment machine (11).

8. The exhaust gas purification equipment for a marine diesel engine using a low-grade fuel equal to or less than fuel oil according to claim 6 or 7, wherein a steam separator (8) for separating and eliminating condensed water from the exhaust gas or the EGR gas is disposed in at least one of the EGR pipe between the exhaust gas cooler and the electrostatic cyclone diesel particulate filter (4), the EGR pipe between the scrubber treatment machine (11) and the EGR cooler (10), and the EGR pipe after the EGR cooler (10).

9. The exhaust gas purification equipment for a marine diesel engine using a low-grade fuel equal to or less than fuel oil according to any one of claims 6 to 8, wherein a blower (13) for pressure-feeding the EGR gas to recirculate the EGR gas to the intake air is disposed in the EGR pipe.

10. The exhaust gas purification equipment for a marine diesel engine using a low-grade fuel equal to or less than fuel oil according to any one of claims 6 to 9, wherein the diesel engine is equipped with a turbocharging system in which a one-stage or multi-stage turbocharger boosts intake air.

11. An exhaust gas purification equipment for a marine diesel engine using a low-grade fuel equal to or less than fuel oil, wherein an exhaust gas cooler (3) is provided in an exhaust pipe which communicates with an exhaust manifold (2) of the engine (1), **characterized in that** said purification equipment comprises an electrostatic cyclone diesel particulate filter (4) that includes an electrostatic precipitation part and a cyclone precipitation part different from the electrostatic precipitation part and eliminates PM (particulate matter) mainly including soluble organic fractions (SOF) and insoluble organic fractions (ISF) contained in the exhaust gas is disposed downstream from the exhaust gas cooler (3), a branching portion (5) for causing part of the exhaust gas to branch as EGR gas is disposed in a portion of the exhaust pipe positioned downstream from the electrostatic cyclone diesel particulate filter (4), and a scrubber treatment machine (11) that contacts with a large amount of water and further purifies the exhaust gas and an EGR valve (6) are disposed in an EGR pipe disposed downstream from the branching portion (5), so that the EGR gas is recirculated to intake air of the engine (1).

12. The exhaust gas purification equipment for a marine diesel engine using a low-grade fuel equal to or less than fuel oil according to claim 11, wherein an EGR cooler (10) for cooling the EGR gas is disposed after the scrubber treatment machine (11).

13. The exhaust gas purification equipment for a marine diesel engine using a low-grade fuel equal to or less than fuel oil according to claim 11 or 12, wherein a steam separator (8) for separating and eliminating condensed water from the exhaust gas or the EGR gas is disposed in at least one of the exhaust pipe between the exhaust gas cooler (3) and the electrostatic cyclone diesel particulate filter (4), the EGR pipe between the scrubber treatment machine (11) and the EGR cooler (10), and the EGR pipe after the EGR cooler (10).

14. The exhaust gas purification equipment for a marine diesel engine using a low-grade fuel equal to or less than fuel oil according to any one of claims 11 to 13, wherein a blower (13) for pressure-feeding the EGR gas to recirculate the EGR gas to the intake air is disposed in the EGR pipe.

15. The exhaust gas purification equipment for a marine diesel engine using a low-grade fuel equal to or less than fuel oil according to any one of claims 11 to 14, wherein the diesel engine is equipped with a turbocharging system in which a one-stage or multi-stage turbocharger boosts intake air.

## Patentansprüche

1. Abgasreinigungsausrüstung für einen Schiffsdieselmotor, der eine minderwertige Treibstoffsorte gleich oder geringer als Heizöl verwendet, einen Abgaskühler (3) umfassend, der in einem Auspuffrohr bereitgestellt ist, welches mit einem Auspuffkrümmer (2) des Motors (1) verbunden ist, **dadurch gekennzeichnet, dass** die Reinigungsausrüstung einen elektrostatischen Zyklon-Dieselpartikelfilter (4) umfasst, der ein elektrostatisches Ausfällungsteil und ein Zyklon-Ausfällungsteil beinhaltet, das sich vom elektrostatischen Ausfällungsteil unterscheidet, und PM (Feinstaub), der hauptsächlich lösliche organische Fraktionen (SOF) und unlösliche organische Fraktionen (ISF) beinhaltet, eliminiert, der in dem Abgas enthalten ist, und der stromabwärts von dem Abgaskühler (3) angeordnet ist, eine Wäscher-Behandlungsmaschine (11), die das Abgas mit einer großen Menge von Wasser kontaktiert und weiter reinigt, die stromabwärts von dem elektrostatischen Zyklon-Dieselpartikelfilter (4) angeordnet ist, und einen Verzweigungsabschnitt (5) um zu bewirken, dass ein Teil des Abgases als EGR-Gas abgezweigt wird, der in einem Abschnitt des Auspuffrohres angeordnet ist, der stromabwärts von der Wäscher-Behandlungsmaschine (11) positioniert ist, sodass das EGR-Gas über ein EGR-Rohr, das mit dem Verzweigungsabschnitt (5) verbunden ist und ein EGR-Ventil (6) zur Einlassluft des Motors (1) rückgeführt wird.

2. Abgasreinigungsausrüstung für einen Schiffsdieselmotor, der eine minderwertige Treibstoffsorte gleich oder geringer als Heizöl verwendet nach Anspruch 1, wobei ein EGR-Kühler (10) zum Kühlen des EGR-Gases in dem EGR-Rohr angeordnet ist.

3. Abgasreinigungsausrüstung für einen Schiffsdieselmotor, der eine minderwertige Treibstoffsorte gleich oder geringer als Heizöl verwendet nach Anspruch 1 oder 2, wobei ein Dampfabscheider (8) zum Abscheiden und Eliminieren von kondensiertem Wasser aus dem Abgas oder dem EGR-Gas in mindestens einem des Auspuffrohres zwischen dem Abgaskühler (3) und dem elektrostatischen Zyklon-Dieselpartikelfilter (4), des Auspuffrohres oder EGR-Rohres zwischen der Wäscher-Behandlungsmaschine (11) und dem EGR-Kühler (10), und des EGR-Rohres nach dem EGR-Kühler (10) angeordnet ist.

4. Abgasreinigungsausrüstung für einen Schiffsdieselmotor, der eine minderwertige Treibstoffsorte gleich oder geringer als Heizöl verwendet nach einem der Ansprüche 1 bis 3, wobei ein Gebläse (13) zur Druckbeaufschlagung des EGR-Gases zum Rückführen des EGR-Gases in die Einlassluft in dem EGR-Rohr angeordnet ist.

5. Abgasreinigungsausrüstung für einen Schiffsdieselmotor, der eine minderwertige Treibstoffsorte gleich oder geringer als Heizöl verwendet nach einem der Ansprüche 1 bis 4, wobei der Dieselmotor mit einem Turboladesystem ausgerüstet ist, in dem ein einstufiger oder mehrstufiger Turbolader die Einlassluft auflädt.

6. Abgasreinigungsausrüstung für einen Schiffsdieselmotor, der eine minderwertige Treibstoffsorte gleich oder geringer als Heizöl verwendet, wobei ein Verzweigungsabschnitt (5), um zu bewirken, dass ein Teil des Abgases als EGR-Gas abgezweigt wird, in einem Auspuffrohr angeordnet ist, welches mit einem Auspuffkrümmer (2) des Motors (1) verbunden ist, und ein Abgaskühler (3) in einem EGR-Rohr angeordnet ist, welches mit dem Verzweigungsabschnitt (5) verbunden ist, **dadurch gekennzeichnet, dass** die Reinigungsausrüstung einen elektrostatischen Zyklon-Dieselpartikelfilter (4) umfasst, der ein elektrostatisches Ausfällungsteil und ein Zyklon-Ausfällungsteil beinhaltet, das sich vom elektrostatischen Ausfällungsteil unterscheidet, und PM (Feinstaub), der hauptsächlich lösliche organische Fraktionen (SOF) und unlösliche organische Fraktionen (ISF) beinhaltet, eliminiert, der in dem Abgas enthalten ist, und der stromabwärts von dem Abgaskühler (3) angeordnet ist, und eine Wäscher-Behandlungsmaschine (11), die das Abgas mit einer großen Menge von Wasser kontaktiert und weiter reinigt, die stromabwärts von dem elektrostatischen Zyklon-Dieselpartikelfilter (4) angeordnet ist, sodass das EGR-Gas über ein EGR-Ventil (6), das stromabwärts von der Wäscher-Behandlungsmaschine (11) angeordnet ist, zu der Einlassluft des Motors (1) rückgeführt wird.

7. Abgasreinigungsausrüstung für einen Schiffsdieselmotor, der eine minderwertige Treibstoffsorte gleich oder geringer als Heizöl verwendet, nach Anspruch 6, wobei ein EGR-Kühler (10) zum Kühlen des EGR-Gases nach der Wäscher-Behandlungsmaschine (11) angeordnet ist.

8. Abgasreinigungsausrüstung für einen Schiffsdieselmotor, der eine minderwertige Treibstoffsorte gleich oder geringer als Heizöl verwendet, nach Anspruch 6 oder 7, wobei ein Dampfabscheider (8) zum Abscheiden und Eliminieren von kondensiertem Wasser aus dem Abgas oder dem EGR-Gas in mindestens einem des EGR-Rohres zwischen dem Abgaskühler und dem elektrostatischen Zyklon-Dieselpartikelfilter (4), des EGR-Rohres zwischen der Wäscher-Behandlungsmaschine (11) und dem EGR-Kühler (10) und des EGR-Rohres nach dem EGR-Kühler (10) angeordnet ist.

9. Abgasreinigungsausrüstung für einen Schiffsdieselmotor, der eine minderwertige Treibstoffsorte gleich oder geringer als Heizöl verwendet, nach einem der Ansprüche 6 bis 8, wobei ein Gebläse (13) zur Druckbeaufschlagung des EGR-Gases zum Rückführen des EGR-Gases in die Einlassluft in dem EGR-Rohr angeordnet ist.

10. Abgasreinigungsausrüstung für einen Schiffsdieselmotor, der eine minderwertige Treibstoffsorte gleich oder geringer als Heizöl verwendet, nach einem der Ansprüche 6 bis 9, wobei der Dieselmotor mit einem Turboladesystem ausgerüstet ist, in dem ein einstufiger oder mehrstufiger Turbolader die Einlassluft auflädt.

11. Abgasreinigungsausrüstung für einen Schiffsdieselmotor, der eine minderwertige Treibstoffsorte gleich oder geringer als Heizöl verwendet, wobei ein Abgaskühler (3) in einem Auspuffrohr bereitgestellt ist, welches mit einem Auspuffkrümmer (2) des Motors (1) verbunden ist, **dadurch gekennzeichnet, dass** die Reinigungsausrüstung einen elektrostatischen Zyklon-Dieselpartikelfilter (4) umfasst, der ein elektrostatisches Ausfällungsteil und ein Zyklon-Ausfällungsteil beinhaltet, das sich vom elektrostatischen Ausfällungsteil unterscheidet, und PM (Feinstaub), der hauptsächlich lösliche organische Fraktionen (SOF) und unlösliche organische Fraktionen (ISF) beinhaltet, eliminiert, der in dem Abgas enthalten ist, der stromabwärts von dem Abgaskühler (3) angeordnet ist, einen Verzweigungsabschnitt (5) um zu bewirken, dass ein Teil des Abgases als EGR-Gas abgezweigt wird, der in einem Abschnitt des Auspuffrohres angeordnet ist, der stromabwärts von dem elektrostatischen Zyklon-Dieselpartikelfilter (4) positioniert ist, und eine Wäscher-Behandlungsmaschine (11), die das Abgas mit einer großen Menge von Wasser kontaktiert und weiter reinigt, und ein EGR-Ventil (6), die in einem EGR-Rohr angeordnet sind, das stromabwärts von dem Verzweigungsabschnitt (5) angeordnet ist, sodass das EGR-Gas zu der Einlassluft des Motors (1) rückgeführt wird.

12. Abgasreinigungsausrüstung für einen Schiffsdieselmotor, der eine minderwertige Treibstoffsorte gleich oder geringer als Heizöl verwendet, nach Anspruch 11, wobei ein EGR-Kühler (10) zum Kühlen des EGR-Gases nach der Wäscher-Behandlungsmaschine (11) angeordnet ist.

13. Abgasreinigungsausrüstung für einen Schiffsdieselmotor, der eine minderwertige Treibstoffsorte gleich oder geringer als Heizöl verwendet, nach Anspruch 11 oder 12, wobei ein Dampfabscheider (8) zum Abscheiden und Eliminieren von kondensiertem Wasser aus dem Abgas oder dem EGR-Gas in mindestens einem des Auspuffrohres zwischen dem Abgaskühler (3) und dem elektrostatischen Zyklon-Dieselpartikelfilter (4), des EGR-Rohres zwischen der Wäscher-Behandlungsmaschine (11) und dem EGR-Kühler (10), und des EGR-Rohres nach dem EGR-Kühler (10) angeordnet ist.

14. Abgasreinigungsausrüstung für einen Schiffsdieselmotor, der eine minderwertige Treibstoffsorte gleich oder geringer als Heizöl verwendet, nach einem der Ansprüche 11 bis 13, wobei ein Gebläse (13) zur Druckbeaufschlagung des EGR-Gases zum Rückführen des EGR-Gases in die Einlassluft in dem EGR-Rohr angeordnet ist.

15. Abgasreinigungsausrüstung für einen Schiffsdieselmotor, der eine minderwertige Treibstoffsorte gleich oder geringer als Heizöl verwendet, nach einem der Ansprüche 11 bis 14, wobei der Dieselmotor mit einem Turboladesystem ausgerüstet ist, in dem ein einstufiger oder mehrstufiger Turbolader die Einlassluft auflädt.

## Revendications

1. Dispositif d'épuration des gaz d'échappement pour un moteur diesel marin utilisant un carburant de basse qualité égale ou inférieure à celle de l'huile lourde, comprenant un refroidisseur des gaz d'échappement (3) est fourni dans un tuyau d'échappement qui communique avec un collecteur d'échappement (2) du moteur (1), **caractérisé en ce que** ledit dispositif d'épuration comprend un filtre à particules diesel cyclonique électrostatique (4) qui inclut une partie de précipitation électrostatique et une partie de précipitation cyclonique différente de la partie de précipitation électrostatique et élimine des PM (particules), incluant principalement des fractions organiques solubles (SOF) et des fractions organiques insolubles (ISF), contenues dans les gaz d'échappement, est disposé en aval du refroidisseur des gaz d'échappement (3), une machine de traitement par lavage (11) qui entre en contact avec une grande quantité d'eau et purifie encore les gaz d'échappement est disposée en aval du filtre à particules diesel cyclonique électrostatique (4), et une partie de branchement (5) pour amener une partie des gaz d'échappement à dévier en tant que gaz d'EGR est disposée dans une partie du tuyau d'échappement positionnée en aval de la machine de traitement par lavage (11), de sorte que le gaz d'EGR soit remis en circulation dans l'air d'admission du moteur (1) par l'intermédiaire d'un tuyau d'EGR qui communique avec la partie de branchement (5) et une soupape d'EGR (6).

2. Dispositif d'épuration des gaz d'échappement pour un moteur diesel marin utilisant un carburant de basse qualité égale ou inférieure à celle de l'huile lourde selon la revendication 1, dans lequel un refroidisseur d'EGR (10) pour refroidir le gaz d'EGR est disposé dans le tuyau d'EGR.

3. Dispositif d'épuration des gaz d'échappement pour un moteur diesel marin utilisant un carburant de basse qualité égale ou inférieure à celle de l'huile lourde selon la revendication 1 ou 2, dans lequel un séparateur de vapeur (8) pour séparer et éliminer l'eau condensée des gaz d'échappement ou du gaz d'EGR est disposé dans au moins l'un du tuyau d'échappement entre le refroidisseur des gaz d'échappement (3) et le filtre à particules diesel cyclonique électrostatique (4), du tuyau d'échappement ou du tuyau d'EGR entre la machine de traitement par lavage (11) et le refroidisseur d'EGR (10), et du tuyau d'EGR après le refroidisseur d'EGR (10).

4. Dispositif d'épuration des gaz d'échappement pour un moteur diesel marin utilisant un carburant de basse qualité égale ou inférieure à celle de l'huile lourde selon l'une quelconque des revendications 1 à 3, dans lequel une soufflante (13) pour alimenter sous pression en gaz d'EGR afin de remettre en circulation le gaz d'EGR dans l'air d'admission est disposée dans le tuyau d'EGR.

5. Dispositif d'épuration des gaz d'échappement pour un moteur diesel marin utilisant un carburant de basse qualité égale ou inférieure à celle de l'huile lourde selon l'une quelconque des revendications 1 à 4, dans lequel le moteur diesel est équipé d'un système de turbocompresseur dans lequel un turbocompresseur mono-étagé ou multi-étagé augmente l'air d'admission.

6. Dispositif d'épuration des gaz d'échappement pour un moteur diesel marin utilisant un carburant de basse qualité égale ou inférieure à celle de l'huile lourde, dans lequel une partie de branchement (5) pour amener une partie des gaz d'échappement à dévier en tant que gaz d'EGR est disposée dans un tuyau d'échappement qui communique avec un collecteur d'échappement (2) du moteur (1), et un refroidisseur des gaz d'échappement (3) est disposé dans un tuyau d'EGR qui communique avec la partie de branchement (5), **caractérisé en ce que** ledit dispositif d'épuration comprend un filtre à particules diesel cyclonique électrostatique (4) qui inclut une partie de précipitation électrostatique et une partie de précipitation cyclonique différente de la partie de précipitation électrostatique et élimine des PM (particules), incluant principalement des fractions organiques solubles (SOF) et des fractions organiques insolubles (ISF), contenues dans les gaz d'échappement, est disposé en aval du refroidisseur des gaz d'échappement (3), et une machine de traitement par lavage (11) qui entre en contact avec une grande quantité d'eau et purifie encore les gaz d'échappement est disposée en aval du filtre à particules diesel cyclonique électrostatique (4), de sorte que le gaz d'EGR soit remis en circulation dans l'air d'admission du moteur (1) par l'intermédiaire d'une soupape d'EGR (6) disposée en aval de la machine de traitement par lavage (11).

7. Dispositif d'épuration des gaz d'échappement pour un moteur diesel marin utilisant un carburant de basse qualité égale ou inférieure à celle de l'huile lourde selon la revendication 6, dans lequel un refroidisseur d'EGR (10) pour refroidir le gaz d'EGR est disposé après la machine de traitement par lavage (11).

8. Dispositif d'épuration des gaz d'échappement pour un moteur diesel marin utilisant un carburant de basse qualité égale ou inférieure à celle de l'huile lourde selon la revendication 6 ou 7, dans lequel un séparateur de vapeur (8) pour séparer et éliminer l'eau condensée des gaz d'échappement ou du gaz d'EGR est disposé dans au moins l'un du tuyau d'EGR entre le refroidisseur des gaz d'échappement et le filtre à particules diesel cyclonique électrostatique (4), du tuyau d'EGR entre la machine de traitement par lavage (11) et le refroidisseur d'EGR (10), et du tuyau d'EGR après le refroidisseur d'EGR (10).

9. Dispositif d'épuration des gaz d'échappement pour un moteur diesel marin utilisant un carburant de basse qualité égale ou inférieure à celle de l'huile lourde selon l'une quelconque des revendications 6 à 8, dans lequel une soufflante (13) pour alimenter sous pression en gaz d'EGR afin de remettre en circulation le gaz d'EGR dans l'air d'admission est disposée dans le tuyau d'EGR.

10. Dispositif d'épuration des gaz d'échappement pour un moteur diesel marin utilisant un carburant de basse qualité égale ou inférieure à celle de l'huile lourde selon l'une quelconque des revendications 6 à 9, dans lequel le moteur diesel est équipé d'un système de turbocompresseur dans lequel un turbocompresseur mono-étagé ou multi-étagé augmente l'air d'admission.

11. Dispositif d'épuration des gaz d'échappement pour un moteur diesel marin utilisant un carburant de basse qualité égale ou inférieure à celle de l'huile lourde, dans lequel un refroidisseur des gaz d'échappement (3) est fourni dans un tuyau d'échappement qui communique avec un collecteur d'échappement (2) du moteur (1), **caractérisé en ce que** ledit dispositif d'épuration comprend un filtre à particules diesel cyclonique électrostatique (4) qui inclut une partie de précipitation électrostatique et une partie de précipitation cyclonique différente de la partie de précipitation électrostatique et élimine des PM (particules), incluant principalement des fractions organiques solubles (SOF) et des fractions organiques insolubles (ISF), contenues dans les gaz d'échappement, est disposé en aval du refroidisseur des gaz d'échappement (3), une partie de branchement (5) pour amener une partie des gaz d'échappement à dévier en tant que gaz d'EGR est disposée dans une partie du tuyau d'échappement positionnée en aval du filtre à particules diesel cyclonique électrostatique (4), et une machine de traitement par lavage (11) qui entre en contact avec une grande quantité d'eau et purifie encore les gaz d'échappement et une soupape d'EGR (6) est disposée dans un tuyau d'EGR disposé en aval de la partie de branchement (5), de sorte que le gaz d'EGR soit remis en circulation dans l'air d'admission du moteur (1).

12. Dispositif d'épuration des gaz d'échappement pour un moteur diesel marin utilisant un carburant de basse qualité égale ou inférieure à celle de l'huile lourde selon la revendication 11, dans lequel un refroidisseur d'EGR (10) pour refroidir le gaz d'EGR est disposé après la machine de traitement par lavage (11).

13. Dispositif d'épuration des gaz d'échappement pour un moteur diesel marin utilisant un carburant de basse qualité égale ou inférieure à celle de l'huile lourde selon la revendication 11 ou 12, dans lequel un séparateur de vapeur (8) pour séparer et éliminer l'eau condensée des gaz d'échappement ou du gaz d'EGR est disposé dans au moins l'un du tuyau d'échappement entre le refroidisseur des gaz d'échappement (3) et le filtre à particules diesel cyclonique électrostatique (4), du tuyau d'EGR entre la machine de traitement par lavage (11) et le refroidisseur d'EGR (10), et du tuyau d'EGR après le refroidisseur d'EGR (10).

14. Dispositif d'épuration des gaz d'échappement pour un moteur diesel marin utilisant un carburant de basse qualité égale ou inférieure à celle de l'huile lourde selon l'une quelconque des revendications 11 à 13, dans lequel une soufflante (13) pour alimenter sous pression en gaz d'EGR afin de remettre en circulation le gaz d'EGR dans l'air d'admission est disposée dans le tuyau d'EGR.

15. Dispositif d'épuration des gaz d'échappement pour un moteur diesel marin utilisant un carburant de basse qualité égale ou inférieure à celle de l'huile lourde selon l'une quelconque des revendications 11 à 14, dans lequel le moteur diesel est équipé d'un système de turbocompresseur dans lequel un turbocompresseur mono-étagé ou multi-étagé augmente l'air d'admission.
